# EUROPEAN PATENT SPECIFICATION

(11) **EP 3 210 845 B1**
(45) Date of publication and mention of the grant of the patent: **29.06.2022**
(21) Application number: 15852219.3
(22) Date of filing: 05.06.2015
(51) Int. Cl.: B61B 1/02, E01F 1/00, B60R 3/02

(54) **PLATFORM STEP DEVICE**
PLATTFORMSCHRITTVORRICHTUNG
AGENCEMENT DE MARCHE DE QUAI

(30) Priority: 22.10.2014 KR 20140143364; 22.10.2014 KR 20140143362; 03.06.2015 KR 20150078700; 03.06.2015 KR 20150078701
(43) Date of publication of application: 30.08.2017
(73) Proprietor: Jinhap Industry Co., Ltd., Daejeon 306-220 (KR)
(72) Inventor: PARK, Min Heung, Suwon-si Gyeonggi-do 442-870 (KR); KWAK, Heui Man, Daejeon 305-737 (KR); KIM, Min Ho, Daejeon 306-120 (KR); HAHN, Min Soo, Seongnam-si Gyeonggi-do 463-929 (KR); KIM, Hyun Dong, Jeonju-si Jeollabuk-do 561-833 (KR); LEE, Jeong Hun, Daejeon 302-725 (KR); LEE, Won Joon, Daejeon 34302 (KR)
(74) Representative: Ter Meer Steinmeister & Partner
(86) International application number: PCT/KR2015/005669
(87) International publication number: WO 2016/064062

(56) References cited:
- EP-A2- 2 335 991
- FR-A1- 2 907 747
- JP-A- 2000 052 975
- JP-A- 2005 225 310
- JP-U- S60 170 258
- KR-A- 20040 068 825
- KR-B1- 100 901 944

## Description

### TECHNICAL FIELD

The present invention relates to a platform step unit and a device including the same, and more particularly, to an auxiliary step device which is mounted on a platform at a railway station in a withdrawable manner, thereby ensuring a safe boarding state of boarding passengers.

### BACKGROUND ART

In general, side entrance/exit doors of a railway vehicle are formed to have a predetermined height from the ground surface, and a platform is installed to correspond to the heights of the entrance/exit doors of the railway vehicle at a railway station where the railway vehicle stops in order for passengers to board or alight from the railway vehicle through the entrance/exit doors. Thus, the passengers board or alight from the railway vehicle through the entrance/exit doors on the platform.

In addition, in the case of a railway vehicle such as a subway train that enters a subway station in a city, passengers board the rail vehicle through a platform in the subway station. The platform is designed to have a height corresponding to the heights of the side entrance/exit doors of the railway vehicle such as the subway train so as to induce the smooth boarding of the passengers.

Moreover, in recent years, safety features such as screen doors are mounted at the platform in order to prevent accidents at the subway station and thus various safety facilities are installed.

Such as conventional technology can merely prevent a passenger from falling on a railroad track from the platform, but in the case where the passenger boards a railway vehicle that has entered the railway station, his or her foot is caught between the railway vehicle and the platform or an object is inserted therebetween. In order to solve this problem, the passenger stays in the railway station for a considerable time, thereby involving a problem in that there occurs a railway running loss due to a delay of the running time between stations on the entire railroad track. However, the conventional technology does not draw a solution to the problem. According to the prior art, research is in progress on a platform where a rubber stepping plate as a passive element is mounted to minimize a gap between the platform and the railway vehicle, but there is a difference in the gap between the platform and the railway vehicle entering a railway or subway station depending on each railway or subway station, and there is a considerable gap difference between platform and the railway vehicle depending on the operational state of a railway vehicle or a subway vehicle or the platform position at a corresponding boarding gate. Such a standardized passive element has a limitation in appropriately minimizing a gap between the platform and the vehicle in accordance with the respective environmental conditions.

Further, there is a problem of a spatial restriction in that the mounting of the screen door onto the platform leads to a reduction in the mounting space of an additional safety feature.

Besides, there is a restriction in the design requirements for an auxiliary safe feature that minimizes a possibility of occurrence of safety accidents when the vehicle enters the railway or subway station.

Patent Document 1: Korean Patent No. 10-0843334 B

JP 60-170258 U describes an auxiliary step device for closing a gap formed between a train and a curved home.

### DISCLOSURE OF INVENTION

### TECHNICAL PROBLEM

Accordingly, the present invention has been made to solve the above-mentioned problems occurring in the prior art, and it is an object of the present invention to provide a platform step device which can minimize a gap between a platform and a railway vehicle, thus leading to prevention of an occurrence of a safety accident and a delay of the vehicle operation.

Another object of the present invention is to provide a platform step device which can be formed as a space-intensive foldable structure, thus leading to a minimization of the mounting space thereof.

Still another object of the present invention is to provide a platform step device which can prevent an occurrence of a safe accident due to a vehicle collision, and provide a separation structure from a driving unit to avoid a possibility of damage of the entire system, thus leading to a minimization of maintainability and cost issues. That is, still another object of the present invention is to provide a platform step device having a structure of facilitating maintenance.

Yet another object of the present invention is to provide a platform step device which can basically prevent the occurrence of a safety accident due to a vehicle collision on a normal basis.

A further object of the present invention is to provide a platform step device which includes a foldable step unfolder that performs a smooth unfolding operation of a platform step plate in an initial drive stage.

A still further object of the present invention is to provide a platform step device which can directly utilize a driving force of a driving unit for a foldable step unfolder that performs a smooth unfolding operation of a platform step plate in an initial drive stage.

### TECHNICAL SOLUTION

To achieve the above objects, in one aspect, the present invention provides a platform step device including: a housing unit disposed at a platform in a position-fixed manner; a driving unit including a driving motor disposed at the housing unit; a transmission unit configured to transmit a driving force generated from the driving unit; and a foldable step unit comprising a foldable step inner folding support part operated inside the housing unit by means of the driving force of the driving unit, which is transmitted through the transmission unit, and a foldable step plate connected at least to the foldable step inner folding support part and configured to rotate around a rotational axis formed along a longitudinal direction parallel to that of the platform in response to the operation of the foldable step inner folding support part so that the foldable step plate can be collapsibly folded, withdrawn, and accommodated.

In the platform step device, the foldable step inner folding support part includes a plurality of rotational axes arranged in non-parallel with each other when projected on a plane perpendicular to the vehicle entry direction of the platform P at the time of completely unfolding the foldable step plate.

In the platform step device, the foldable step inner folding support part may include: an inner folding upper support connected at one end thereof to the foldable step plate in a relatively rotational manner; and an inner folding lower support part connected at one end thereof to the other end of the inner folding upper support in a relatively rotational manner and rotatably connected at other end thereof to the housing unit.

In the platform step device, the other end of inner folding lower support part may include a rotational axis perpendicular to the ground surface.

In the platform step device, the inner folding upper support may include: an inner folding upper press extension serving as an end of the inner folding upper support and disposed at an end toward the housing unit during the folding operation of the foldable step inner folding support part, an inner folding upper press roller disposed at the inner folding upper press extension and configured to be brought into close contact with a side of the housing unit during the folding operation of the foldable step inner folding support part.

In the platform step device, the rotational axis of the inner folding upper press roller may be disposed at a position closer to the housing unit side than the rotational axis between the inner folding upper support and the inner folding lower support part during the complete folding operation of the foldable step inner folding support part.

In the platform step device, the inner folding lower support part may include an inner folding lower press recess formed therein to correspond to the inner folding upper press extension so as to prevent an interference between the inner folding upper press extension and the inner folding upper press roller.

In the platform step device, in the case where the foldable step plate is completely unfolded, a rotational axis between the foldable step plate and the inner folding upper support, a rotational axis between the inner folding upper support and the inner folding lower support, and a rotational axis between the inner folding lower support part and the housing unit may positioned on the same plane perpendicular to the longitudinal direction of the platform in such a manner as to cross each other at one point.

In the platform step device, the foldable step unit 200 may include a foldable step unfolder 230 disposed between the foldable step plate and the housing unit and configured to provide an unfolding force for enabling the unfolding of the foldable step plate around the rotational axis therebetween.

In the platform step device, The foldable step unfolder may include an unfolder plate body rotatably connected at one end thereof to the foldable step plate, an unfolder housing body rotatably connected at one end thereof to the other end of the unfolder plate body, and an unfolder elastic part disposed between the unfolder plate body and the unfolder housing body and configured to provide an elastic force to therebetween.

In the platform step device, the foldable step plate may include a safety unit including a safety sensor configured to detect a stepping object on the foldable step plate.

In another preferred aspect, the present invention provides a platform step device including: a housing unit disposed at a platform in a position-fixed manner; a driving unit including a driving motor disposed at the housing unit; a transmission unit configured to transmit a driving force generated from the driving unit; and a foldable step unit comprising a foldable step inner folding support part operated inside the housing unit by means of the driving force of the driving unit, which is transmitted through the transmission unit, and a foldable step plate connected at least to the foldable step inner folding support part and configured to rotate around a rotational axis formed along a longitudinal direction parallel to that of the platform in response to the operation of the foldable step inner folding support part so that the foldable step plate can be collapsibly folded, withdrawn, and accommodated, wherein the foldable step inner folding support part includes a plurality of rotational axes arranged in non-parallel with each other when projected on a plane perpendicular to the vehicle entry direction of the platform P at the time of completely unfolding the foldable step plate, wherein the driving unit generates a driving force enabling the movement of the foldable step plate in a vehicle entry direction of the platform, and wherein the transmission unit transmits the driving force of the driving unit to the foldable step unit to rotate the foldable step folding support part in such a manner that an at least part of the transmission unit releases the contact between the driving unit and the foldable step unit.

In the platform step device, the driving unit may include: a driving motor configured to generate the driving force for driving the foldable step unit; a driving shaft connected to the driving motor so as to be arranged in the vehicle entry direction of the platform; and a driving block configured to be movable along the longitudinal direction of the driving shaft and connected to the transmission unit.

In the platform step device, the transmission unit may include: a transmission link body 410 connected to one end of the driving unit; and a transmission hole linkage 430 configured to be brought into close contact with the transmission link body 410, and connected at one end thereof to the foldable step inner folding support part.

In the platform step device, the transmission link body 410 may include: a transmission link driving body connected at one end thereof to the driving unit and configured to transmits a rectilinear driving force by the driving unit as a rotational driving force; a transmission link body plate connected at one end thereof to the transmission link driving body in a relatively rotational manner, and rotatably connected at the other end thereof to the housing unit side; and a transmission link body housing connection part mounted to the housing body in a position-fixed manner, and rotatably connected to the other end of the transmission link body plate.

In the platform step device, the foldable step inner folding support part 20 may be provided in plural number. The transmission hole linkage 430 may include: a transmission hole step body 431 connected at one end thereof to the foldable step inner folding support part 220; a transmission hole linkage body 433 connected to the transmission hole step body 431 in a relatively rotational manner; and a transmission hole linkage locker 437 fixedly disposed at the transmission hole linkage body 433 so as to be operated together with the transmission hole linkage body and brought into close contact with the transmission link body.

In the platform step device, the transmission hole linkage locker 437 may be brought into close contact with the transmission link body plate connected at one end thereof to the transmission link driving body and rotatably connected at the other end thereof to the housing unit side, the transmission link driving body being connected to the driving unit and configured to transmits a rectilinear driving force by the driving unit as a rotational driving force.
the transmission link body 410 may include: a transmission link driving body connected at one end thereof to the driving unit and configured to transmits a rectilinear driving force by the driving unit as a rotational driving force; a transmission link body plate connected at one end thereof to the transmission link driving body in a relatively rotational manner, and rotatably connected at the other end thereof to the housing unit side

In the platform step device, the transmission unit may further include a transmission locking hook part 420 configured to form an engagement and disengagement state between the transmission hole linkage locker 437 and the transmission link body plate.

In the platform step device, the transmission locking hook part 420 comprises: a transmission locking hook body 421 rotatably mounted to the transmission link body plate 411; a transmission locking hook 423 formed at an end of the transmission locking hook body 421, and configured to be engageable with the transmission hole linkage locker 437, and a transmission locking hook body rotation hinge 425 configured to allow the transmission locking hook body 421 to be rotatably mounted to the transmission link body plate 411.

In the platform step device, the transmission locking hook part 420 may further include a transmission locking hook body rotation stopper 427 configured to restrict the rotation of the transmission locking hook body 421.

In the platform step device, the transmission locking hook part 420 may include a transmission locking hook body elastic part 4211 connected at one end thereof to the transmission link body plate 411 side and connected at the other end thereof to the transmission locking hook body 421 to provide an elastic force that elastically supports the transmission locking hook body 421 in a predetermined direction.

In the platform step device, the transmission locking hook part 420 may further include a transmission locking auxiliary hook 4210 rotatably connected at one end thereof to the transmission link body plate 411 and brought into close contact at the other end thereof with the transmission hole linkage locker 437 in such a manner that the transmission hole linkage locker 437 is engageable with the transmission locking hook 423.

In the platform step device, the transmission locking auxiliary hook 4210 may be formed as a structure in which a pair of clamps is engaged with each other, and may further include a transmission locking auxiliary hook elastic part 4220 configured to provide an elastic force to one end of the transmission locking auxiliary hook 4210.

In the platform step device, each foldable step inner folding support part 220 may be connected to the transmission hole step body 431, the transmission hole linkage body 433 may have the transmission hole linkage body connection through-holes 434, and the transmission hole linkage body connection part 435 may be mounted at the linkage body connection through-hole 434.

In the platform step device, the platform step device may further include a safety unit including a safety impact bar positioned prior to the arrangement of the foldable step plate in the longitudinal direction of the platform to allow the foldable step plate to be collapsibly folded by an impact force due to a line contact with a railway vehicle when the railway vehicle enters the platform while the foldable step plate is unfolded due to an erroneous operation.

In the platform step device, the safety impact bar may include: an impact bar upper body disposed spaced apart from the foldable step inner folding support part in such a manner as to be positioned at a front end of the platform, and configured to be brought into close contact with the vehicle; and an impact bar lower body connected to the impact bar upper body in such a manner as to be rotatably mounted to the housing unit and connected to the transmission unit.

In the platform step device, the impact bar upper body may include an upper body buffering part formed on one side thereof which is oriented toward the vehicle entry direction of the platform.

In still another preferred aspect, the present invention provides a platform step device including: a housing unit disposed at a platform in a position-fixed manner; a driving unit including a driving motor disposed at the housing unit; a transmission unit configured to transmit a driving force generated from the driving unit; and a foldable step unit comprising a foldable step inner folding support part operated inside the housing unit by means of the driving force of the driving unit, which is transmitted through the transmission unit, and a foldable step plate connected at least to the foldable step inner folding support part and configured to rotate around a rotational axis formed along a longitudinal direction parallel to that of the platform in response to the operation of the foldable step inner folding support part so that the foldable step plate can be collapsibly folded, withdrawn, and accommodated, wherein the foldable step unit 200 may include a foldable step unfolder 230 disposed between the foldable step plate and the transmission unit and configured to provide an unfolding force for enabling the unfolding of the foldable step plate around the rotational axis therebetween.

In the platform step device, the transmission unit may include: a transmission link body 410 connected to one end of the driving unit; and a transmission hole linkage 430 configured to be brought into close contact with the transmission link body 410 in a relative movable manner within a preset range, and connected at one end thereof to the foldable step inner folding support part.

In the platform step device, the transmission link body 410 may include: a transmission link driving body 419 connected at one end thereof to the driving unit and configured to transmits a rectilinear driving force by the driving unit as a rectilinear and rotational driving force; and a transmission link body plate 411 rotatably mounted at one side thereof to the housing unit and disposed at the other side thereof in such a manner as to be brought into close contact with the transmission link driving body.

In the platform step device, the foldable step inner folding support part may be provided in plural number. The transmission hole linkage 430 may include: a transmission hole step body 431 connected at one end thereof to the foldable step inner folding support part 220; a transmission hole linkage body 433 connected to the transmission hole step body 431 in a relatively rotational manner; and a transmission hole linkage locker 437 connected at one side thereof to the transmission hole linkage body 433 and disposed at the other side thereof at the transmission link body plate 411 so that a relative rotation between the transmission hole linkage body 433 and the transmission link body plate 411 is permitted within a preset angular range.

In the platform step device, the transmission hole linkage locker 437 may include a transmission hole linkage locker hole 4371 formed in a rectangular shape and disposed at the transmission hole step body 433; and a transmission hole linkage locker rod 4373 disposed at the transmission link body plate 411 and movably inserted into transmission hole linkage locker hole 4371.

In the platform step device, the foldable step unfolder 230 may include: a foldable step unfolder shaft 231 connected to the transmission link body plate 411 so as to rotate together with the transmission link body plate; and a foldable step unfolder linkage 233 disposed at the foldable step unfolder shaft 2310 in such a manner as to extend radially from a rotational axis, wherein an end side of the foldable step unfolder linkage 233 may be brought into close contact with the bottom surface of the foldable step plate.

In the platform step device, the foldable step unfolder linkage 233 may include a foldable step unfolder roller 235 disposed at an end thereof.

In the platform step device, the transmission hole linkage locker hole 4371 may be formed in a rectangular shape, and when an initial operation starts from a state in which the foldable step plate is completely folded, the transmission hole linkage locker rod 4373 may perform a relative translational movement from an initial position inside the transmission hole linkage locker hole 4371 along with the rotation of the transmission link body plate 411, and the foldable step unfolder linkage may initially operate the foldable step plate by the rotation of the foldable step unfolder shaft 231.

In the platform step device, when the transmission hole linkage locker rod 4373 is positioned at a position opposite to the initial position of the transmission hole linkage locker hole 4371, the driving force from the driving unit may be transmitted to the transmission hole linkage body 431 through the transmission hole linkage locker rod 4373.

In yet another preferred aspect, the present invention provides a platform step device including: a housing unit disposed at a platform in a position-fixed manner; a driving unit including a driving motor disposed at the housing unit; a transmission unit configured to transmit a driving force generated from the driving unit; and a foldable step unit comprising a foldable step inner folding support part operated inside the housing unit by means of the driving force of the driving unit, which is transmitted through the transmission unit, and a foldable step plate connected at least to the foldable step inner folding support part and configured to rotate around a rotational axis formed along a longitudinal direction parallel to that of the platform in response to the operation of the foldable step inner folding support part so that the foldable step plate can be collapsibly folded, withdrawn, and accommodated, wherein the foldable step inner folding support part includes a plurality of rotational axes arranged in non-parallel with each other when projected on a plane perpendicular to the vehicle entry direction of the platform P at the time of completely unfolding the foldable step plate, wherein the driving unit generates a driving force enabling the movement of the foldable step plate in a vehicle entry direction of the platform, wherein the transmission unit transmits the driving force of the driving unit to the foldable step unit to rotate the foldable step folding support part in such a manner that an at least part of the transmission unit releases the contact between the driving unit and the foldable step unit, and wherein the transmission unit includes a transmission link body 410 connected to one end of the driving unit; and a transmission hole linkage 430 configured to be brought into close contact with the transmission link body 410 in a relative movable manner within a preset range, and connected at one end thereof to the foldable step inner folding support part.

In the platform step device, the driving unit may include: a driving motor configured to generate the driving force for driving the foldable step unit; a driving shaft connected to the driving motor so as to be arranged in the vehicle entry direction of the platform; and a driving block configured to be movable along the longitudinal direction of the driving shaft and connected to the transmission unit.

In the platform step device, the transmission link body 410 may include: a transmission link driving body 419 connected at one end thereof to the driving unit and configured to transmits a rectilinear driving force by the driving unit as a rectilinear and rotational driving force; and a transmission link body plate 411 rotatably mounted at one side thereof to the housing unit and disposed at the other side thereof in such a manner as to be brought into close contact with the transmission link driving body.

In the platform step device, the transmission unit may further include a transmission locking hook part 420 configured to form an engagement and disengagement state between the transmission link driving body 419 and the transmission link body plate 411.

In the platform step device, the foldable step inner folding support part may be provided in plural number. The transmission hole linkage 430 may include: a transmission hole step body 431 connected at one end thereof to the foldable step inner folding support part 220; a transmission hole linkage body 433 connected to the transmission hole step body 431 in a relatively rotational manner; and a transmission hole linkage locker 437 connected at one side thereof to the transmission hole linkage body 433 and disposed at the other side thereof at the transmission locking hook part 420 so that a relative rotation between the transmission hole linkage body 433 and the transmission locking hook part 420 is permitted within a preset angular range.

In the platform step device, the transmission hole linkage locker 437 may include a transmission link body locker base 4371 formed in a rectangular shape and disposed at the transmission hole step body 433, and a transmission link body locker shaft 4373 disposed at the transmission link body plate 411 and is movably inserted into transmission hole linkage locker hole 4371.

In the platform step device, the transmission locking hook part 420 may include: a transmission locking hook body 421 rotatably mounted to the transmission link body plate 411; a transmission locking hook 423 formed at an end of the transmission locking hook body 421, and configured to be engageable with the transmission link driving body 419 side, and a transmission locking hook body rotation hinge 425 configured to allow the transmission locking hook body 421 to be rotatably mounted to the transmission link body plate 411.

In the platform step device, the transmission locking hook part 420 may include a transmission locking hook body elastic part 4220 connected at one end thereof to the transmission link body plate 411 side and connected at the other end thereof to the transmission locking hook body 421 to provide an elastic force that elastically supports the transmission locking hook body 421 in a predetermined direction.

In the platform step device, the platform step device may further include a safety unit including a safety impact bar positioned prior to the arrangement of the foldable step plate in the longitudinal direction of the platform to allow the foldable step plate to be collapsibly folded by an impact force due to a line contact with a railway vehicle when the railway vehicle enters the platform while the foldable step plate is unfolded due to an erroneous operation.

In the platform step device, the safety impact bar may include: an impact bar upper body disposed spaced apart from the foldable step inner folding support part in such a manner as to be positioned at a front end of the platform, and configured to be brought into close contact with the vehicle; and an impact bar lower body connected to the impact bar upper body in such a manner as to be rotatably mounted to the housing unit and connected to the transmission unit.

In the platform step device, the impact bar upper body may include an upper body buffering part formed on one side thereof which is oriented toward the vehicle entry direction of the platform.

In the platform step device, the safety unit may include a safety link 530 connected to the safety impact bar, and a safety traction part 540 formed at the safety link 530, the transmission link body plate 411, and the transmission locking hook body 421 and configured to operate the transmission hole linkage 430 using a rotational force transmitted through the safety link 530 to forcibly collapsibly fold the foldable step plate.

In the platform step device, the safety traction part 540 may include a safety traction pole 541 disposed at an end of the safety link, and a safety traction hole 543 formed at the transmission link body plate 411 in such a manner as to be engaged with the safety traction pole 541 in a confinement manner.

In the platform step device, the safety traction part 540 may include a safety traction unlocking trigger 545 formed at a side of the transmission locking hook body 421 in such a manner as to be positioned at a position opposite to the transmission locking hook 423 and brought into close contact with the safety traction pole 541, and configured to receive a force from the safety traction pole 541 to transmit a rotational force to the transmission locking hook body 421.

It should be noted that only paragraphs 0017, 0018, 0019, 0025, 0027, 0028, 0029, 0030, 0042, 0045, 0047, 0048, 0054, 0056 and 0057 are related to embodiments of the invention covered by the appended claims 1-14. The remaining paragraphs under "TECHNICAL SOLUTION" describe embodiments which are not covered by the claims but which are maintained for information purposes.

### ADVANTAGEOUS EFFECTS

The present invention is intended to solve the problems occurring in the prior art and the platform step device according to the embodiments of the present invention as constructed above have the following advantageous effects.

The platform step device of the present invention functions as a safety feature that can minimize a spacing between the platform and the railway vehicle so that a delay of railway operation due to a problem associated with insertion of passengers' feet between the railway vehicle and the platform can be prevented to enable a generally stable and accurate railway operation, along with the ensuring of a safe boarding of passengers and the prevention of the inflow of foreign substances and through the foldable step plate

The platform step device of the present invention enables a free design configuration by escaping from the restriction of the mounting space through the foldable step plate, and provides a safe foldable structure through the collapsible folding function of the foldable step plate, thereby solving a spatial restriction.

The platform step device of the present invention can avoid or minimize a possibility of occurrence of safety accidents through the safety impact bar and/or the safety sensor that are/is disposed at a front end of the platform step device.

The platform step device of the present invention enables to implement a structure in which the foldable step unit and the driving unit can be separated from each other so that a damage of the entire system including the driving unit due to an external force by an unwanted collision between the railway vehicle and the platform step device can be minimized, thereby leading to improvement of maintainability and minimization of management costs.

The platform step device of the present invention can impart an initial folding impetus so that the foldable step plate in a collapsibly folded state can be smoothly unfolded through the foldable step unfolder.

The platform step device of the present invention can take a simple configuration in which the foldable step inner folding support part and the driving unit are not directly associated with each other, but indirectly cooperates with each other for the sake of smoothness of the folding and unfolding operation through the foldable step unfolder employing an elastic force, thereby completing a simple structure.

The platform step device of the present invention can take a direct unfolding configuration in which the foldable step plate is directly operated through the foldable step unfolder that directly uses the driving force of the driving unit, thereby completing a simple structure.

The platform step device of the present invention can avoid or minimize a possibility of occurrence of safety accidents caused by the forcible folding operation of the foldable step plate through the foldable structure of the transmission hole linkage body directly connected to the safety impact bar disposed at a front end of the platform step device and the foldable step inner folding support part connected to the transmission hole linkage body.

The platform step device of the present invention can provide a predetermined clearance through the safety link without directly interconnecting the safety impact bar and the transmission hole linkage body, and take a transmission link body plate-connecting structure so that the foldable step inner folding support part and the foldable step plate forms a forcibly foldable structure with respect to all the unfolding situations except the completely unfolded state of the foldable step plate, thereby preventing a possibility of occurrence of safety accidents and maximizing durability.

The platform step device of the present invention can achieve a structure in which the driving unit side, the safety unit, and the foldable step unfolder are connected to one another through the transmission link body plate of the transmission link body so that it is possible to return the positions of the constituent elements to their original positions in an easier and smoother manner even upon the switching of the operating state from the release state of the transmission link locking hook part to the locking state.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a schematic perspective view showing an installation example of a platform step device according to one embodiment of the present invention;
FIG. 2 is a schematic perspective view showing an installation example of a platform step device according to one embodiment of the present invention when viewed from a different view point;
FIG. 3 is a schematic exploded perspective view showing a platform step device according to one embodiment of the present invention;
FIG. 4 is a schematic partial perspective view showing a platform step device according to one embodiment of the present invention;
FIG. 5 is a schematic perspective view showing a housing of a platform step device according to one embodiment of the present invention;
FIG. 6 is a schematic partial perspective view showing a foldable step unit, a transmission unit, and a driving unit of a platform step device according to one embodiment of the present invention;
FIG. 7 is a partially enlarged view showing the foldable step unit and the transmission unit of FIG. 6;
FIG. 8 is a partially enlarged view showing the driving unit and the transmission unit of FIG. 6;
FIG. 9 is a schematic partial perspective view showing a platform step device according to one embodiment of the present invention when viewed from a different view point;
FIGs. 10 and 11 are schematic perspective views showing a foldable step inner folding support part of a platform step device according to one embodiment of the present invention;
FIGs. 12 and 13 are schematic perspective views showing a safety impact bar of a platform step device according to one embodiment of the present invention;
FIG. 14 is a schematic perspective view showing a foldable step plate of a platform step device according to one embodiment of the present invention;
FIGs. 15 and 16 are schematic perspective views showing a foldable step unfolder provided at a platform step device according to one embodiment of the present invention;
FIGs. 17 and 18 are schematic perspective views showing a transmission link body provided at the transmission unit of a platform step device according to one embodiment of the present invention;
FIGs. 19 and 20 are schematic perspective views showing a transmission locking hook part provided at the transmission unit of a platform step device according to one embodiment of the present invention;
FIGs. 21 and 22 are schematic partial perspective views showing the unfolded state of the foldable step unit of a platform step device according to one embodiment of the present invention;
FIG. 23 is a schematic partial, projective perspective view showing the mounting state of an inner folding lower base holder of a foldable step inner folding support part of a platform step device according to one embodiment of the present invention;
FIG. 24 is a schematic side view showing the unfolding process ((a) to (f)) of the foldable step plate of a platform step device according to one embodiment of the present invention;
FIG. 25 is a schematic front view showing the operational state of a connection part between an inner folding upper support and an inner folding lower support in the unfolding process of the foldable step plate of a platform step device according to one embodiment of the present invention;
FIG. 26 is a schematic side view stepwisely showing the unfolding process of the foldable step plate of a platform step device according to one embodiment of the present invention;
FIGs. 27 to 30 are schematic side views showing the unfolding process of the foldable step plate of a platform step device according to one embodiment of the present invention;
FIG. 31 is a schematic partial, projective top plan view showing a transmission locking hook part of a platform step device according to one embodiment of the present invention;
FIG. 32 is a schematic exploded perspective view showing a platform step device according to another embodiment of the present invention;
FIG. 33 is a schematic perspective view showing a platform step device according to one embodiment of the present invention when viewed from a different view point;
FIG. 34 is a schematic perspective view showing a housing of a platform step device according to another embodiment of the present invention;
FIG. 35 is a schematic partial perspective view showing a foldable step unit, a transmission unit, and a driving unit of a platform step device according to another embodiment of the present invention;
FIG. 36 is a partial exploded perspective view showing the foldable step unit and the transmission unit of FIG. 35;
FIGs. 37 and 38 are partial exploded perspective views showing the foldable step unit of a platform step device according to another embodiment of the present invention;
FIG. 39 is a partial exploded perspective view showing a safety unit of a platform step device according to another embodiment of the present invention;
FIGs. 40 to 42 are partial exploded perspective views showing a foldable step unit, a transmission unit, and a safety unit of a platform step device according to another embodiment of the present invention;
FIG. 43 is a schematic perspective view showing a foldable step unfolder of a platform step device according to another embodiment of the present invention;
FIG. 44 is a schematic perspective view showing the foldable step unfolder of a platform step device according to another embodiment of the present invention when viewed from a different view point;
FIGs. 45 and 46 are schematic perspective view showing the connection relationship between the foldable step unfolder and the transmission unit of a platform step device according to another embodiment of the present invention;
FIG. 47 is a schematic perspective view showing the connection relationship between the foldable step unfolder and the transmission unit of a platform step device according to another embodiment of the present invention;
FIG. 48 is a schematic perspective view showing the foldable step unfolder of a platform step device according to another embodiment of the present invention when viewed from a different view point;
FIG. 49 is a schematic partial perspective view showing the safety unit of a platform step device according to another embodiment of the present invention when viewed from a different view point; and
FIGs. 50 to 53 are schematic partial top plan views showing the state of the foldable step unfolder and the transmission unit of a platform step device according to another embodiment of the present invention.

### BEST MODE FOR CARRYING OUT THE INVENTION

Now, preferred embodiments of the present invention will be described hereinafter in detail with reference to the accompanying drawings. It should be noted that the same elements in the drawings are denoted by the same reference numerals although shown in different figures. In the following description, the detailed description on known function and constructions unnecessarily obscuring the subject matter of the present invention will be avoided hereinafter.

A platform step device according to one embodiment of the present invention includes a foldable step unit including a foldable step plate.

First, the platform step device 10 of the present invention includes a housing unit 100, a platform step unit 200, a driving unit 300, and a transmission unit 400. The platform step device 10 further includes a safety unit 500, if necessary.

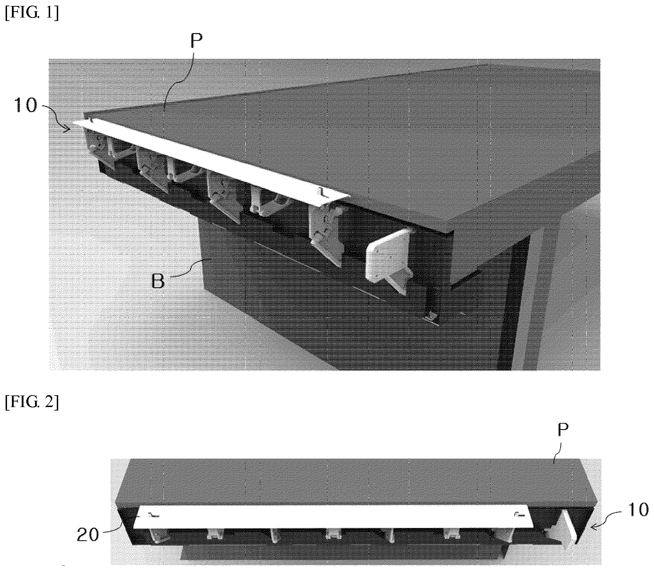

The platform step device 10 according to one embodiment of the present invention is mounted at a bottom side of a platform P, and forms an unfolding structure in which the platform step device 10 is rotatably operated at the bottom side of the platform P so as to be unfolded toward a movable space side of a vehicle where the platform is formed and a folding structure in which the platform step device 10 is folded toward the bottom side of the platform P (see FIGs. 1 and 2) .

The housing unit 100 is securely fixed to the platform P formed at a railway station. A base end part B of the platform is disposed at a lower end of the platform P so as to support the platform P where passengers waits for the boarding of a railway vehicle. A vehicle such as a railway vehicle enters a railway station along the longitudinal direction of the platform P. In this case, the longitudinal direction of the platform P is substantially in parallel with the direction in which the vehicle enters railway station. Under the circumstances, the platform P may form a curved entry section. In the case of the curved entry structure, the entry direction of the vehicle and the longitudinal direction of the platform may be identical to each other in a curved tangential direction at a point where passengers board the vehicle. Under the circumstances, the curved entry structure may be modified in various manners such as forming the entry direction of the vehicle and the longitudinal direction of the platform in a substantial curved longitudinal direction.

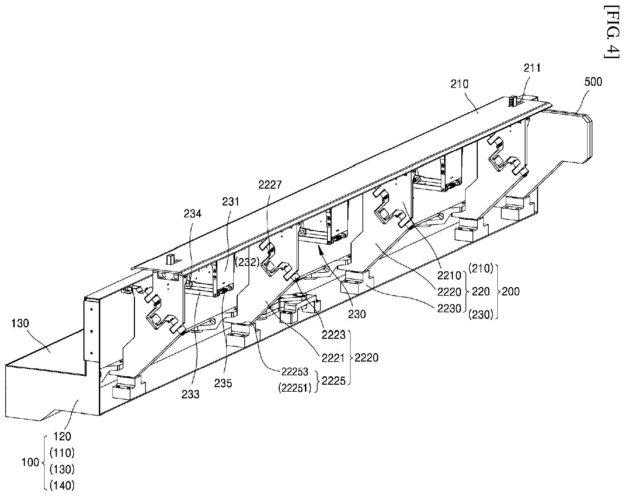

The housing unit 100 includes a housing body 110, a housing front cover 120, a housing base cover 130, and a housing guide cover 140. The housing body 110 is fixedly mounted to the bottom side of the platform P. The housing front cover 120, the housing base cover 130, and the housing guide cover 140 are respectively mounted on a side of the housing body 110, a bottom mounting surface of the platform P, and a bottom mounting surface of the platform P, which is oriented toward a vehicle moving region to define a space that accommodates other constituent elements. The housing guide cover 140 is disposed at a front lower end of the housing front cover 120. The housing guide cover 140 includes an inclined face 141 (see FIG. 4) so that when a foldable step inner folding support part 220 rotates, an interference with other constituent elements can be excluded, and simultaneously a region where the housing front cover 120 is exposed to the outside can be covered.

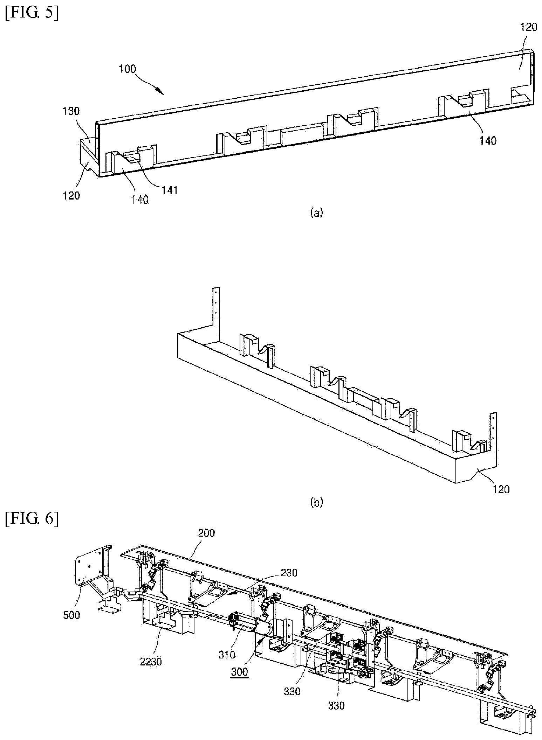

The driving unit 300 (see FIG. 6) includes a driving motor 310 disposed at the housing unit 100. The driving unit 300 according to one embodiment of the present invention includes a driving motor 310, a driving shaft 320, and a driving block 330. The driving shaft 320 is connected to the driving motor 310 so as to be arranged in the vehicle entry direction of the platform P so that the driving shaft 320 can rotate by the rotational driving force generated from the driving motor 310. The driving block 330 takes a structure in which it is movable along the longitudinal direction of the driving shaft 320. The driving unit 300 may further include a separate guide at a lower portion thereof so as to perform a stable movement of the driving block330. Thus, the driving block 330 moves rectilinearly along the driving shaft 320 by the rotational driving force of the driving motor 310 and transmits a rectilinear driving force to the transmission unit 300. In this embodiment, the driving shaft and the driving block of the driving unit are of a ball screw type, but the driving unit may be configured in various manners within a range of providing the rotational driving force to the foldable step unit through the transmission unit which will be described later.

The transmission unit 400 serves to transmit the driving force generated from the driving unit 300 to the foldable step unit 200. The transmission unit 400 includes a transmission link body 410 and a transmission hole linkage 430. The transmission unit 400 according to one embodiment of the present invention may further include a transmission locking hook part 420.

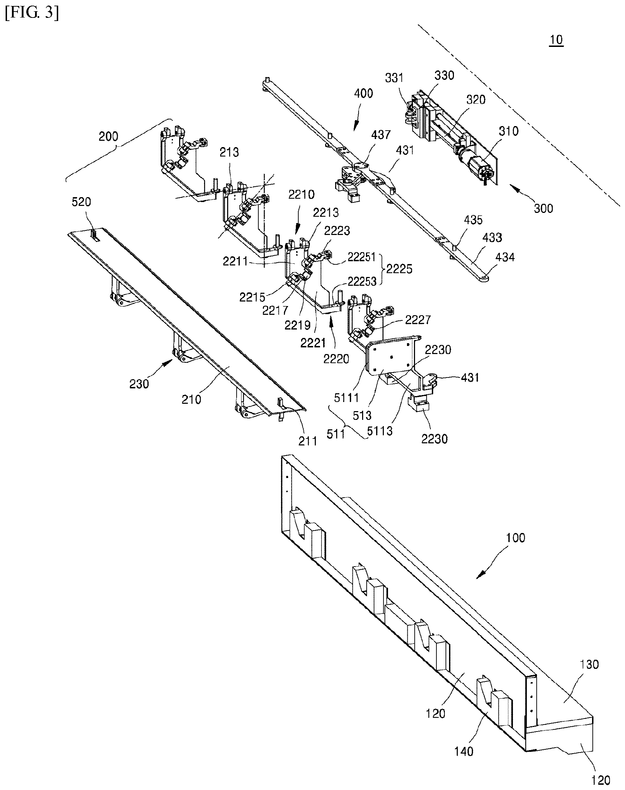

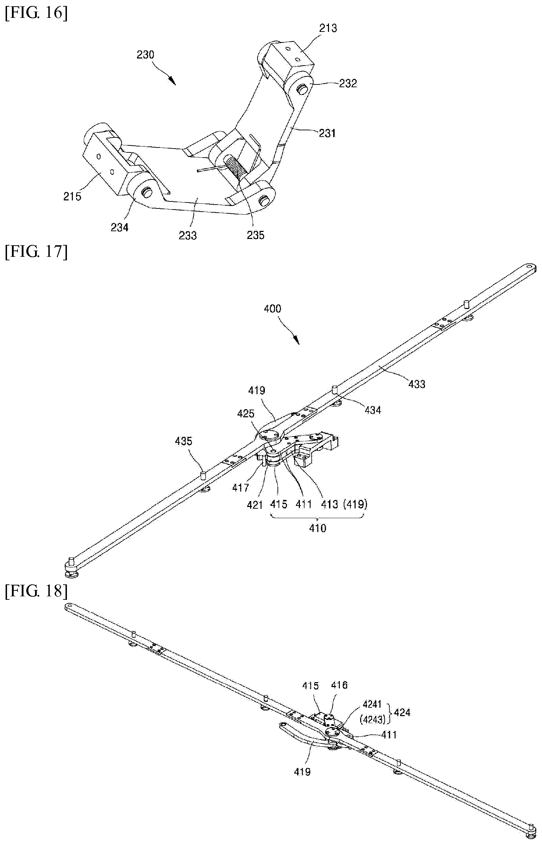

The transmission link body 410 is connected to one end of the driving unit 300. Referring to FIGs. 3, 8, 17 to 20, the transmission link body 410 includes a transmission link driving body 419, a transmission link body plate 411, and a transmission link body housing connection part 415.

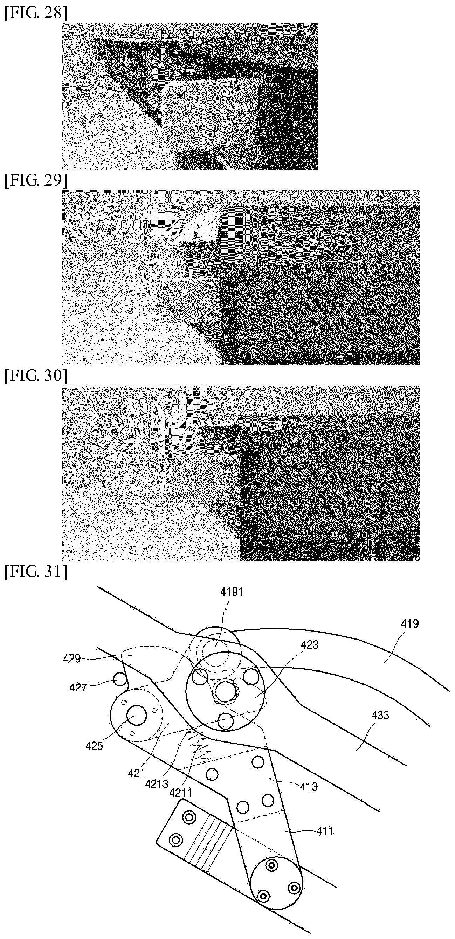

The transmission link driving body 419 is connected at one end thereof to the driving unit 300 and transmits a rectilinear driving force by the driving unit 300 as a rotational driving force for application to other constituent elements. The one end of the transmission link driving body 419 is connected to a driving block connection part 331 formed on the driving block 330 of the driving unit 300 in a relatively rotational manner, and the other end of the transmission link driving body 419 is connected to the transmission link body plate 411 through a transmission link driving body connection part 4191 (see FIG. 31). The transmission link driving body 419 is formed of a curved link type having an arcuate round shape in this embodiment, but it may be modified in various manners depending on the design specifications.

The transmission link body plate 411 is connected at one end thereof to the transmission link driving body 419 in a relatively rotational manner, and rotatably connected at the other end thereof to the housing unit 100 side, more specifically the housing body 110. The other end side of the transmission link body plate 411 is connected to the transmission link body housing connection part 415 in a relatively rotational manner. The transmission link driving body 419 connected at both ends thereof to the transmission link body housing connection part 415 and the driving block connection part 331 by the operation of the driving unit 300 is operated to transmit a predetermined driving force to the foldable step unit 200 through the transmission hole linkage 430.

The transmission link body housing connection part 415 disposed at the other end of the transmission link body plate is mounted to the housing body 110 in a position-fixed manner. In this embodiment, the transmission link body housing connection part 415 takes a U-shaped structure, but this is merely an example and may be configured in various manners within a range of taking a structure of being fixed in position to the housing side.

Meanwhile, in this embodiment, the transmission link body plate 411 is implemented as a double-plate structure in which two plates are arranged in parallel with each other, and a transmission link body spacer 413 is disposed between the two plates so that a space is defined therebetween. As described below, this structure can allow for a structure in which the operation of the transmission locking hook part 400 is facilitated and an interference with other constituent elements is excluded in the case where the transmission unit 400 further includes a transmission locking hook part 420.

The transmission hole linkage 430 can be brought into close contact with the transmission link body 410, and is connected at one end thereof to the foldable step inner folding support part 220. The transmission hole linkage 430 and the transmission link body 410 take a structure in which they can be brought into close contact with each other and separated from each other. As such, the transmission link body 410 of the transmission unit 400 is connected to the driving unit 300 side, and the transmission hole linkage 430 of the transmission unit 400 is connected to the foldable step unit 200. The transmission hole linkage 430 and the transmission link body 410 take a structure in which they can be brought into close contact with each other and separated from each other to form a structure in which the foldable step unit 200 and the driving unit 300 can be separated from each other, thereby leading to an improvement of maintainability and a remarkable reduction in the possibility of burdensome incurrence of costs by the replacement of the entire system due to a damage of the driving unit according to the application of an external force caused by an unwanted situation to the foldable step unit 200 side, and then the subsequent direct application of the external force to the driving unit

The foldable step inner folding support part 220 of the foldable step unit 200 of the present invention may take a structure in which it is provided in plural numbers. In this case, the transmission hole linkage 430 may transmit the driving force applied thereto from the driving force to a plurality of foldable step inner folding support parts 220 on a batch basis. In the case an unwanted external force is applied to the safety impact bar 500 of the safety unit 500, the transmission hole linkage 430 operates the plurality of the foldable step inner folding support parts 220 on a batch basis to prevent an additional damage. In addition, the application of the external force to the driving unit 300 side is interrupted through a structure of being capable of being separated from the transmission link body 410 to protect the entire system, thereby ensuring maintainability.

The transmission hole linkage 430 includes a transmission hole step body 431, a transmission hole linkage body 433, and a transmission hole linkage locker 437.

The transmission hole step body 431 is connected at one end thereof to the foldable step inner folding support part 220, i.e., is fixedly connected at one end thereof to an inner folding lower housing bottom connection part 22253 of an inner folding lower housing connection part 2225 formed at a lower end of the foldable step inner folding support part 220. The transmission hole step body 431 is formed as a bent-shaped link having a predetermined included angle so as to rotate together with the foldable step inner folding support part 220. In this embodiment, the transmission hole step body 431 takes a structure in which it is connected to the safety impact bar 510 of the safety unit 500 in the same manner as in the above case.

The transmission hole linkage body 433 is connected to the transmission hole step body 431 in a relatively rotational manner. The transmission hole linkage body 433 is formed as a rectilinear link. In this embodiment, the transmission hole linkage body 433 takes a structure in which it is connected to the plurality of foldable step inner folding support parts 220 and/or the safety impact bar 510 in a relatively rotational manner.

The transmission hole linkage body 433 has a plurality of transmission hole linkage body connection through-holes 434 formed thereon so that a transmission hole linkage body connection part 435 is disposed at each transmission hole linkage body connection through-hole 434. By virtue of this configuration, the transmission hole linkage body 433 is connected to one or more transmission hole step bodies 431. In other words, each foldable step inner folding support part 220 is connected to the transmission hole step body 431, the transmission hole linkage body 433 has the transmission hole linkage body connection through-holes 434, and the transmission hole linkage body connection part 435 is mounted at the linkage body connection through-hole 434.

Thus, when the transmission hole linkage body 433 is moved, the plurality of the foldable step inner folding support part 220 connected to each other by means of the transmission hole step body 431 and/or the safety impact bar 510 can be moved integrally together.

The transmission hole linkage locker 437 is fixedly disposed at the transmission hole linkage body 433 to form a structure in which it can be moved together with the transmission hole linkage body 433 and brought into close contact with the transmission link body 410. In other words, the transmission hole linkage locker 437 includes a transmission link body locker base 4371 and a transmission link body locker shaft 4373. The transmission link body locker shaft 4373 passes through one of the transmission hole linkage body connection through-holes 434 formed on the transmission hole linkage body 433 and extends downwardly, and the transmission link body locker base 4371 is fixedly mounted to the transmission hole linkage body 433. An at least part of the transmission link body locker shaft 4373 that has passed through the transmission hole linkage body 433 can be brought into close contact with a side of the transmission link body 410 in a separable state. By virtue of this structure, the transmission of an external force and the interruption of the transmission thereof between the driving unit 300 and the foldable step unit 200 can be smoothly performed.

The transmission link driving body 419 is connected at one side thereof to the driving unit 300, and transmits the rectilinear driving force by the driving unit 300 as a rotational driving force. The transmission link body plate 411 is connected at one side thereof to the transmission link driving body 419, and rotatably connected at the other side thereof to the housing unit 100 side, more specifically to the housing body 110. By virtue of this configuration, the transmission of an external force by the contact between the transmission link body plate 411 and the transmission link body locker shaft 4373 can be performed.

The transmission unit 400 according to one embodiment of the present invention may further include a constituent element that maintains or releases a connection state between the driving unit and the foldable step unit under actual design conditions by locking an engagement state between the transmission link body plate 411 and the transmission link body locker shaft 4373 and unlocking the locked state at the time of application of an external force of a predetermined level. This configuration achieves a structure which enables a stable folding and unfolding operation of the foldable step unit at normal times and the folding operation of the foldable step unit in the event of an emergency situation, prevents a damage of the driving unit due to the transmission of an external force to the driving unit 300, and completely or substantially avoid a possibility of occurrence of safety accidents.

The transmission locking hook part 420 forms an engagement and disengagement state between the transmission hole linkage locker 437 and the transmission link body plate 411. The transmission locking hook part 420 includes a transmission locking hook body 421, a transmission locking hook 423, and a transmission locking hook body rotation hinge 425.

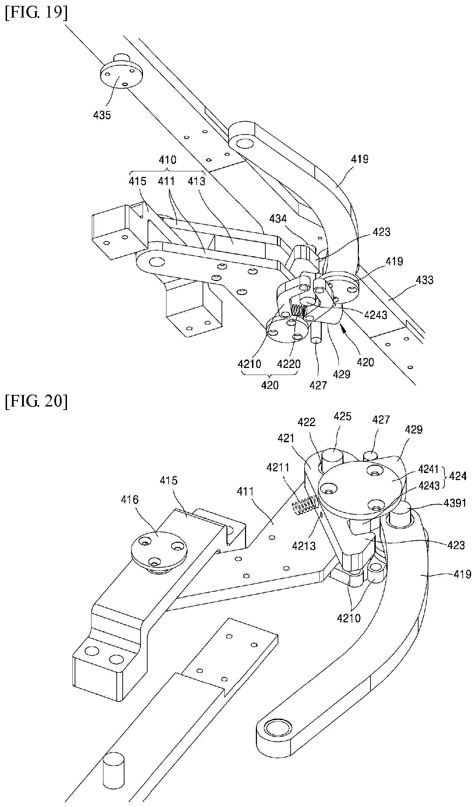

The transmission locking hook body 421 (see FIG. 20) is rotatably mounted to the transmission link body plate 411, and the transmission locking hook body rotation hinge 425 allows the transmission locking hook body 421 to be rotatably mounted to the transmission link body plate 411 so that the transmission locking hook body 421 can rotate around the transmission locking hook body rotation hinge 425 relative to the transmission link body plate 411. In this embodiment, as described above, the present invention achieves a structure in which the transmission locking hook body is rotatably disposed in a space between two parallel transmission link body plates 411

The transmission locking hook 423 is formed at an end of the transmission locking hook body 421, and takes a structure in which it can be engaged with the transmission hole linkage locker 437. In this embodiment, the transmission locking hook 423 has an arrowhead shape to form a retaining structure with the transmission hole linkage locker 437. By virtue of this retaining structure, transmission hole linkage locker 437 forms a double-sided retaining structure by the contact with the transmission locking hook 423 and/or the transmission link body plate 411 so that when the driving block of the driving unit performs a rectilinear forward and backward motion, a smooth cooperative operation can be performed regardless of the transfer direction.

In the meantime, the transmission locking hook part 420 further includes a transmission locking hook body rotation stopper 427. A transmission locking hook body stopper 429 may be disposed at a corresponding side of the transmission locking hook body 421. The transmission locking hook body rotation stopper 427 is fixed in position to the hosing body 110 of the housing unit 100, and an excessive rotation of the transmission locking hook body 421 can be restricted through the contact between the transmission locking hook body stopper 429 and the transmission locking hook body rotation stopper 427.

In addition, the transmission locking hook part 420 may further include a constituent element for maintaining the engagement state with the transmission hole linkage locker 437 under a constant condition. That is, the transmission locking hook part 420 includes a transmission locking hook body elastic part 4211. The transmission locking hook body elastic part 4211 is connected at one end thereof to the transmission link body plate 411 side and connected at the other end thereof to the transmission locking hook body 421 to provide an elastic force that elastically supports the transmission locking hook body 421 in a predetermined direction. The transmission locking hook body 421 includes a transmission locking hook body elastic accommodating part 4213 formed thereon. The transmission locking hook body elastic part 4211 is supported at one end thereof at the inside of transmission locking hook body elastic accommodating part 4213 in a state of being accommodated in the transmission locking hook body elastic accommodating part 4213 and supported at the other end thereof by the transmission link body plate 411 side or the transmission link body spacer 413 so as to provide a predetermined elastic force to the transmission locking hook body 421 and ultimately maintain or release the connection state between the transmission link body 410 side and the transmission hole linkage 430 under a constant condition so that a stable cooperative operation can be achieved and simultaneously a possibility of occurrence of an unwanted damage of the driving unit and a safety accident can be avoided or reduced.

Also, meanwhile, the transmission locking hook part 420 may further include an additional assistant constituent element so as to prevent a possibility of occurrence of a safety accident due to an unwanted disengagement between the transmission hole linkage locker 437 and the transmission locking hook 423. In other words, the transmission locking hook part 420 may further include a transmission locking auxiliary hook 4210. The transmission locking auxiliary hook 4210 is rotatably connected at one end thereof to the transmission link body plate 411 and brought into close contact at the other end thereof with the transmission hole linkage locker 437 in such a manner that the transmission hole linkage locker 437 is engageable with the transmission locking hook 423.

The transmission locking auxiliary hook 4210 can be modified in various manners within a range of taking an engagement structure under a constant condition, but, in this embodiment, the transmission locking auxiliary hook 4210 is formed as a structure in which a pair of clamps is engaged with each other, and takes a structure of providing an elastic force to one end of the transmission locking auxiliary hook 4210. The transmission locking auxiliary hook 4210 includes a transmission locking auxiliary hook elastic part 4240 so as to provide an elastic force to the transmission locking auxiliary hook 4210 and takes a structure of being separable at the time of application of an external force of a predetermined level or more while preventing an unwanted escape of the transmission hole linkage locker 437.

The platform step device 10 according to one embodiment of the present invention includes a foldable step unit 200. The foldable step unit 200 includes a foldable step inner folding support part 220 and a foldable step plate 210. The foldable step plate 210 forms a structure in which it is rotatable around a rotational axis oriented in parallel with the line IV-IV in the longitudinal direction of the platform P, i.e., in a direction parallel with a direction in which a railway vehicle enters so that the foldable step plate 210 is folded toward the bottom side of the platform, which confronts a vehicle entry space.

The foldable step inner folding support part 220 is operated inside the housing unit 100 by means of the driving force generated from the driving motor 310 of the driving unit 300 and transmitted thereto through the transmission unit 400. The foldable step plate 210 takes a structure in which it is at least connected to the foldable step inner folding support part 220 so as to rotate around a rotational axis formed along a longitudinal direction parallel to the longitudinal direction of the platform in response to the operation of the foldable step inner folding support part such that the foldable step plate can be collapsibly folded, withdrawn, and accommodated.

The foldable step inner folding support part 220 of the present invention includes a plurality of rotational axes I-I, II-II, and III-III (see FIG. 3) arranged in non-parallel with each other when projected on a plane perpendicular to the vehicle entry direction of the platform P at the time of completely unfolding the foldable step plate 210. The foldable step inner folding support part 220 is formed as a double-plate type link structure connected between the foldable step plate 210 and the housing unit 100 in such a manner that the rotational axes of a connection hinge structure have a constant angle therebetween to form a plurality of rotational axes I-I, II-II, and III-III as described below.

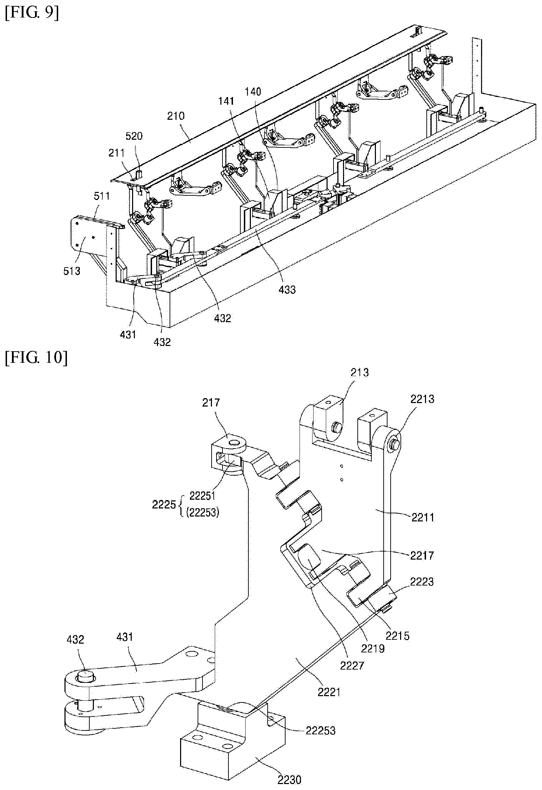

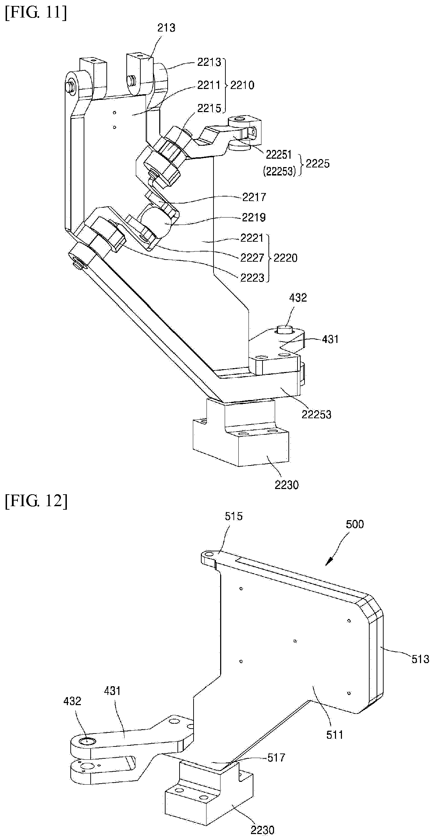

More specifically, as shown in FIGs. 3, 4, 6, 7, 9, 10 and 11, the foldable step inner folding support part 220 include an inner folding upper support 2210 and an inner folding lower support part 2220. The inner folding upper support 2210 is connected at one end thereof to the foldable step plate 210 in a relatively rotational manner. The inner folding lower support part 2220 is connected at one end thereof to the other end of the inner folding upper support 2210 in a relatively rotational manner and rotatably connected at other end thereof to the housing unit 100.

The inner folding upper support 2210 includes an inner folding upper support body 2211. The inner folding upper support body 2211 includes an inner folding upper support plate connection part 2213 formed at an upper end thereof and an inner folding upper lower connection part 2215 formed at an lower end thereof. The foldable step plate 210 includes a foldable step plate connection part 213 formed at a lower end thereof. The inner folding upper support plate connection part 2213 is connected to the foldable step plate connection part 213 in a relatively rotational manner to form a structure of rotating around a rotational axis formed by the line I-I. Under the circumstances, the platform P which a railway vehicle enters may be formed as a curved structure, but a region where the platform step device 10 is substantially positioned can be modified in various manners, such as being formed as a substantial rectilinear structure at a tangential region of a curved railroad track.

The inner folding lower support part 2220 includes an inner folding lower support body 2221. The an inner folding lower support body 2221 includes an inner folding lower support upper connection part 2223 formed at an upper end thereof, and an inner folding lower support housing connection part 2225 formed at a lower end thereof (substantially, a lower end and a side thereof.

The inner folding lower support upper connection part 2223 is rotatably connected to the inner folding upper lower connection part 2215 to form a connection structure in which it rotates around a rotational axis formed by the line II-II. The line II-II forms a structure of having a constant angular relationship when the foldable step plate 210 is completely unfolded with respect to the line I-I (see FIG. 3).

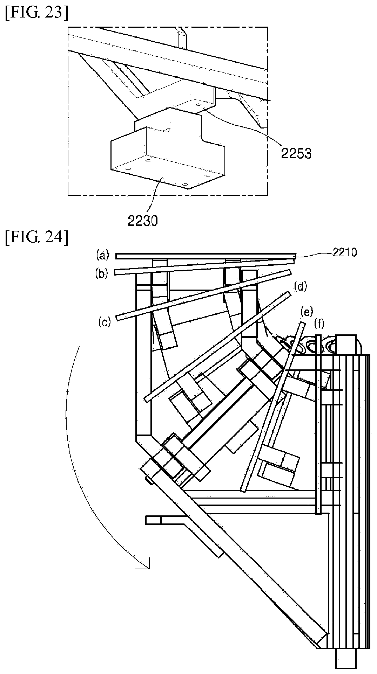

The inner folding lower support housing connection part 2225 is disposed at a lower end, substantially, a side and a lower end of the inner folding lower support body 2221. The inner folding lower support housing connection part 2225 includes an inner folding lower support housing top connection part 22251 and an inner folding lower support housing bottom connection part 22253. The housing unit 100 includes a folding housing connection part 217 and an inner folding lower base holder 2230 that are fixed in position so as to correspond to the inner folding lower support housing top connection part 22251 and the inner folding lower support housing bottom connection part 22253. The inner folding lower support housing connection part 2225 and the housing unit 100 form a structure in which the folding housing connection part 217 and the inner folding lower base holder 2230 are rotatably connected to the inner folding lower support housing top connection part 22251 and the inner folding lower support housing bottom connection part 22253, respectively. A structure in which the inner folding lower support housing connection part 2225 is connected to the housing unit through the inner folding lower base holder 2230 may take a structure in which the inner folding lower base holder 2230 is fixedly mounted to the housing unit 100 side and the inner folding lower support housing bottom connection part 22253 is rotatably mounted to the inner folding lower base holder 2230 as shown in FIG. 23 in a partially projected manner.

The other end, i.e., the side and lower end of the inner folding lower support part 2220 forms a structure of having a rotational axis (i.e., the line III-III) perpendicular to the ground surface. In other words, the present invention form a structure in which the folding housing connection part 217 and the inner folding lower base holder 2230 are rotatably connected to the inner folding lower support housing top connection part 22251 and the inner folding lower support housing bottom connection part 22253, respectively, so that they rotate around the rotational axis formed by the line III-III. This structure is a structure of being substantially perpendicular to the ground surface so that it forms a position-fixed rotational axis unlike the line I-I and the line II-II.

By virtue of this structure, in the case where a stepping-enabling state is formed in which the foldable step plate 210 is completely unfolded to allow passengers to step thereon, a rotational axis (i.e., the line I-I) between the foldable step plate 210 and the inner folding upper support 2210, a rotational axis (i.e., the line II-II) between the inner folding upper support 2210 and the inner folding lower support 2220, and a rotational axis (i.e., the line III-III) between the inner folding lower support part 2220 and the housing unit 100 are positioned on the same plane perpendicular to the longitudinal direction of the platform P in such a manner as to cross each other at one point, thereby achieving a mechanical relationship allowing for a smooth foldable structure.

The foldable step inner folding support part 220 of the present invention is provided in single number or plural numbers. The inner folding lower support part 2220 is connected at a lower end thereof to the transmission hole step body 431 of the transmission hole linkage 430 of the transmission unit 400 and rotates together with the transmission hole step body 431, and the transmission hole step body 431 is rotatably connected at the other end thereof to the transmission hole linkage body 431 through a transmission hole linkage body lower connection part 432 so that the foldable step inner folding support part 220 can achieve a structure of enabling an integrally rotatable operation.

Meanwhile, the inner folding upper support 2210 and the inner folding lower support part 2220 of the present invention form a structure in which they are collapsibly folded between the foldable step plate 210 and the housing unit 100. The present invention may further include a constituent element that achieves a smoothly collapsible folding operation without being unfolded unwantedly in the process in which the inner folding upper support 2210 and the inner folding lower support part 2220 are folded. In other words, the inner folding upper support 2210 includes an inner folding upper press extension 2217 and an inner folding upper press roller 2219.

The inner folding upper press extension 2217, which is an end of the inner folding upper support 2210, is disposed at an end toward the housing unit 100 during the folding operation of the foldable step inner folding support part 220, and forms a structure in which it extends from the end of the folding upper support part 2210 to the inner folding lower support part 2220.

The inner folding upper press roller 2219 is disposed at an end of the inner folding upper press extension 2217. The inner folding upper press roller 2219 is pressingly brought into close contact with a side of the housing unit 100 during the folding operation of the foldable step inner folding support part 220 to transmit a pressing force to an opposite side to the connection axis between the inner folding upper support 2210 and the inner folding lower support part 2220 of the line II-I, i.e., the rotational axis (i.e., the line I-I) between the foldable step plate 210 and the inner folding upper support 2210 so that the foldable step plate 210 can be completely folded collapsibly in a more stable manner.

The rotational axis of the inner folding upper press roller 2219 may be disposed at a position closer to the housing unit 100 side than the rotational axis (i.e., the line II-II) between the inner folding upper support 2210 and the inner folding lower support part 2220 during the complete folding operation of the foldable step inner folding support part 220. This structure can further reinforce a pressing force formed during the contact between the housing unit and the inner folding upper press roller 2219.

In addition, the inner folding lower support part 2220 may include an inner folding lower press recess 2227 formed therein to correspond to the inner folding upper press extension 2217 so as to prevent an interference between the inner folding upper press extension 2217 and the inner folding upper press roller 2219, thereby avoiding an interference between the constituent elements due to a configuration of the inner folding upper press roller 2219.

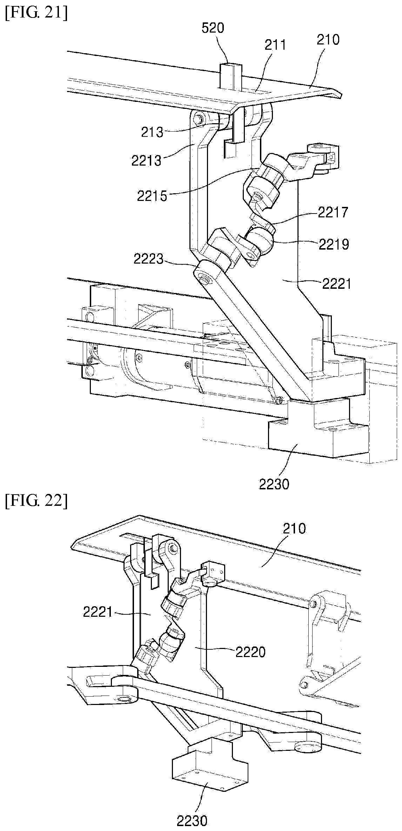

FIGs. 21 and 22 are partial projection views showing the state of a simulation of a platform step device according to one embodiment of the present invention. The inner folding upper press extension 2217 is formed in a "P" shape, and occupies the position of the rotational axis of the inner folding upper press roller 2219 further protrudingly formed in a direction oriented toward a railway vehicle entering the platform, i.e., in a direction opposite to the entry direction of the railway vehicle so that when the foldable step inner folding support part 220 is completely unfolded, the inner folding upper press roller 2219 may form a structure in which it is arranged eccentrically in the entering vehicle-oriented direction from the central line with respect to the ground surface. This is an example of this embodiment, and it is obvious that various positional relationships may be formed depending on the design specifications.

Also, meanwhile, the present invention may further include a constituent element that ensures the smoothness of an initial drive of the foldable step plate when the foldable step inner folding support part 220 is completely unfolded. The foldable step unit 200 includes a foldable step unfolder 230 that is disposed between the foldable step plate 210 and the housing unit 100 and provides an unfolding force for enabling the unfolding of the foldable step plate 210 around the rotational axis therebetween.

The foldable step unfolder 230 includes an unfolder plate body 231, an unfolder housing body 233, and an unfolder elastic part 235. The unfolder plate body 231 is rotatably connected at one end thereof to the foldable step plate 210. The unfolder housing body 233 is rotatably connected at one end thereof to the other end of the unfolder plate body 231. The unfolder elastic part 235 is disposed between the unfolder plate body 231 and the unfolder housing body 233 and provides an elastic force to therebetween.

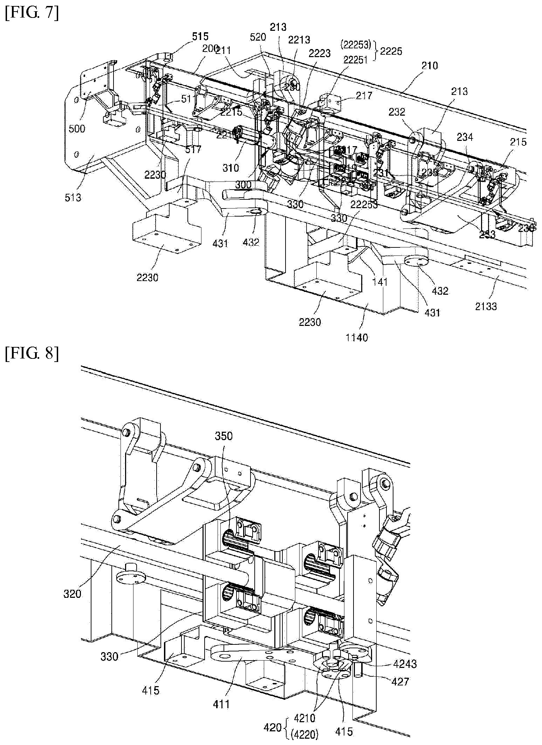

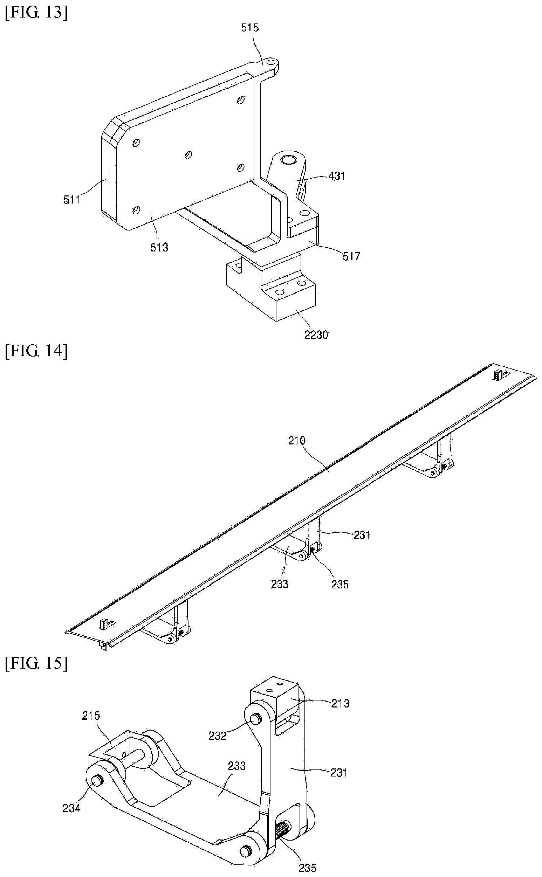

As shown in FIGs. 7, 15 and 16, a foldable step unfolder step connection part 2151 and a foldable step unfolder housing connection part 2153 are disposed at a lower end of the foldable step plate 210 and the housing unit 100 side, respectively. The foldable step unfolder step connection part 2151 is rotatably connected to one end of the unfolder plate body 231 through an unfolder connection part 232, and the foldable step unfolder housing connection part 2153 is rotatably connected to one end of the unfolder housing body 233 through the unfolder connection part 234 in a state in which the unfolder plate body 231 and the unfolder housing body 233 are rotatably connected to each other so that when the foldable step plate 210 is completely unfolded, the unfolder plate body 231 and the unfolder housing body 233 form a structure in which they are unfolded substantially at 90 degrees. Of course, the included angle between the unfolder plate body 231 and the unfolder housing body 233 is an example of this embodiment, the present invention is not limited thereto.

The unfolder elastic part 235 is disposed between the connection parts of the unfolder plate body 231 and the unfolder housing body 233. The unfolder elastic part 235 provides an unfolding force when the unfolder elastic part 235 is unfolded by an initial elastic force so that a more smooth unfolding operation can be performed in an initial drive stage in which it is desired to unfold the foldable step plate 210.

Also, meanwhile, the platform step device 10 according to one embodiment of the present invention may further include a safety unit 500 as a safety feature. The safety unit 500 can be implemented in various forms, but is implemented as a safety sensor 520 and a safety impact bar 510 in this embodiment. First, the safety impact bar 510 is positioned prior to the arrangement of the foldable step plate 210 in the longitudinal direction of the platform so as to first come into close contact with the vehicle to allow the foldable step plate 210 to be collapsibly folded by an impact force due to the contact when the railway vehicle enters the platform P while the foldable step plate 210 is unfolded due to an erroneous operation. The safety impact bar 510 includes a safety impact bar body 511. The safety impact bar body 511 includes an impact bar upper body 5111 and an impact bar lower body 5113 as shown in FIGs. 7, 12 and 13.

The impact bar upper body 5111 forms a structure in which it is disposed spaced apart from the foldable step inner folding support part 220 in the longitudinal direction of the platform P, i.e., the entry direction of the vehicle in such a manner as to be positioned at a front end of the platform, i.e., at the foremost side of the platform where the vehicle enters so that the impact bar upper body 5111 can be brought into close contact with the vehicle. The impact bar lower body 5113 is connected to the impact bar upper body 5111 in such a manner as to be rotatably mounted to the housing unit 100 and connected to the transmission link body 410 of the transmission unit 400.

An impact bar upper connection part 515 is formed at the impact bar upper body 5111 and an impact bar lower connection part 517 is formed at the impact bar lower body 5113. The impact bar upper connection part 515 is connected to a housing base 130 at a lower end of the platform P in a position-fixed manner. The impact bar lower connection part 517 is fixed in position to the housing body 110. The impact bar lower connection part 517 may form a structure in which it is connected to the housing unit 100 through the inner folding lower base holder 2230 of the foldable step inner folding support part 220 of the foldable step unit 200.

The impact bar lower body 5113 is connected to the transmission hole step body 431, and is connected to the transmission hole linkage body 433 through the transmission hole step body 431 so that the transmission hole linkage body 433 is moved rectilinearly in response to the rotation of the impact bar lower body 5113.

By virtue of this structure, the safety impact bar body 511 is rotatably mounted to the housing unit. The safety impact bar body 511 is brought into close contact with a railway vehicle entering the platform P at an unwanted time point, and a rotational force of the safety impact bar body 511, which is caused by an external force, is transmitted to the transmission hole linkage body 433 through the transmission hole step body 431. Then, the safety impact bar body 511 abuts against the plurality of the foldable step inner folding support parts through the plurality of transmission hole step bodies 431 connected to the transmission hole linkage body 433, and ultimately collapsibly folds the foldable step plate 210 to complete a folding structure so that a possibility of collision between the platform step device and the vehicle can be prevented or avoided.

In addition, the impact bar upper body 5111 may include an upper body buffering part 513 formed on a front surface thereof, i.e., on one side thereof which is oriented toward the railway vehicle that enters the platform. The upper body buffering part 513 has a predetermined shock-absorbing function to perform a buffering function at the time of collision between the vehicle and the impact bar upper body 5111 so that a possibility of damage of the impact bar upper body, and the like can be minimized.

In addition, the safety unit 500 further includes the safety sensor 520. The foldable step plate 210 has a foldable step plate sensor through-hole, 211 formed thereon. The safety sensor 520 is implemented as a sensor such as a photosensor that detects the presence of a stepping object such as a passenger or baggage for application to a control unit (not shown) so that a safety accident can be prevented which may occur during the folding operation of the foldable step plate 210. In this embodiment, the safety sensor 520 has been implemented as a photosensor, but it may be configured in various manners within a range of detecting the presence of the stepping object.

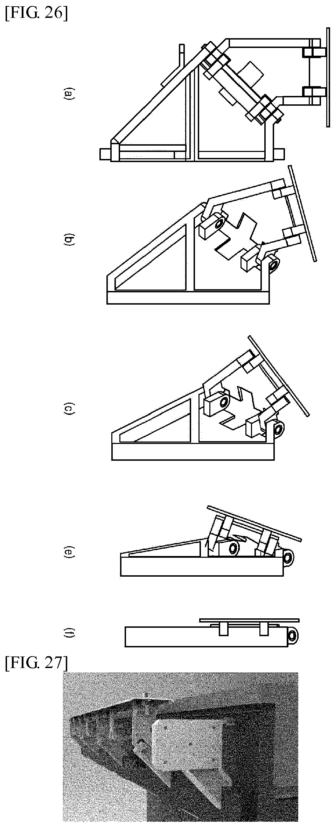

FIGs. 24 to 26 are views showing the operational state of the platform step device according to one embodiment of the present invention, and FIGs. 27 to 30 are simulation diagrams showing the operational state of the platform step device.

The foldable step plate 210 is operated stepwisely as shown in FIGs. 24(a) to 24(f). When it is assumed that a left side on the drawing sheet is a vehicle entry region, the foldable step plate 210 is mounted to a bottom side of the platform P (see FIG. 3) so that it is unfolded subsequently while rotating around a rotational axis formed by a line parallel with the line IV-IV (see FIG. 3), and then is collapsibly folded in an opposite direction (i.e., an arrow direction on the drawing) to the unfolding direction. In this process, the foldable step plate 210 forms a structure in which a relative rotation around the inner folding lower support upper connection part 2223 is performed between the inner folding upper support 2210 and the inner folding lower support 2220, and the inner folding lower support upper connection part 2223 is moved and collapsibly folded in the direction in which the vehicle enters the platform P. FIG. 26 is a side view showing a process in which the foldable step plate 210 is completely unfolded and then collapsibly folded as in the process steps (a), (c), (d), (e) and (f) of FIG. 24. Through such a sequential process, the foldable step plate 210 and the foldable step folding support part form a structure in which they are accommodated in the bottom side of the platform P in a collapsible manner.

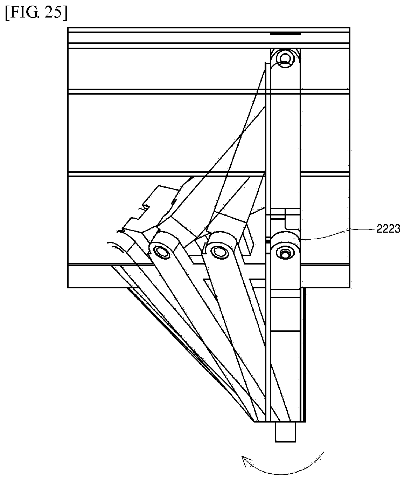

As illustrated in the simulation diagrams showing the operational state of the platform step device of FIGs. 27 to 30, the safety impact bar 510 of the safety unit 500 is arranged at the foremost side of the platform P which a railway vehicle enters in such a manner as to be spaced apart from another foldable step inner folding support part 220 so that when there occurs an unwanted collision of the vehicle against the safety impact bar 510, the safety impact bar 510 rotates and the other foldable step inner folding support part 220 that forms the entire connection structure through the transmission hole linkage body 433 forms a rotational structure with the inner folding lower housing connection part 2225 fixed to the housing unit 100 side toward the vehicle entry direction so that the foldable step inner folding support part 220 is collapsibly folded in the arrow direction shown in FIG. 25 and the foldable step plate 210 associated with the foldable step inner folding support part 220 is rotatably moved in perpendicular to the ground surface so as to be accommodated in the bottom side of the platform P.

In the meantime, the platform step device of the present invention is not limited to the above embodiment, but can be modified in various manners. In other words, in the above-described embodiment, the platform step device further includes the foldable step unfolder for the sake of smoothness of the initial drive of the foldable step plate when the foldable step folding support part is completely folded, but may form a structure in which it is operated in more direct cooperation with the driving unit except the collapsible folding method.

The constituent elements that are the same or substantially the same as those as in the above-described embodiment are denoted by the same reference numerals, and the foregoing will substitute for a redundant description and the description will be made centering on a difference.

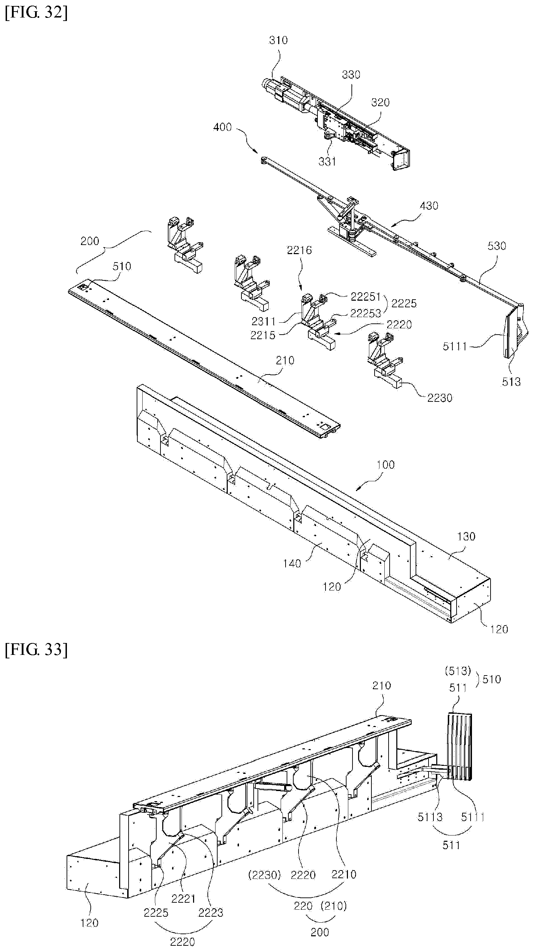

As shown in FIG. 32, the present invention takes a structure in which the foldable step unfolder unfolds the foldable step plate around the rotational axis between the foldable step plate and the housing unit, but the foldable step unfolder 230 in this embodiment unfolds the foldable step plate around a rotary shaft attached to the housing unit between the foldable step plate and the housing unit. In this case, an unfolding force required to unfold the foldable step plate is formed between the foldable step plate 210 and the transmission unit 400. That is, as in the above-described embodiment, unlike the foldable step unfolder that is implemented in a passive and indirect manner in which the driving force generated from the driving unit is not used, the foldable step unfolder may take a structure in which it unfolds the foldable step plate 210 in a cooperative and direct manner in which the driving force generated from the driving unit is used directly.

In this embodiment, as in the above-described embodiment, a platform step device 10 of the present invention includes a housing unit 100, a platform step unit 200, a driving unit 300, and a transmission unit 400. The platform step device 10 may further include a safety unit 500, if necessary.

The platform step device 10 (see FIG. 32) according to one embodiment of the present invention is mounted at a bottom side end of a platform P (see FIG. 1), and forms an unfolding structure in which the platform step device 10 is rotatably operated at the bottom side of the platform P so as to be unfolded toward a movable space side of a vehicle where the platform is formed and a folding structure in which the platform step device 10 is folded toward the bottom side of the platform P (see FIGs. 1 and 2).

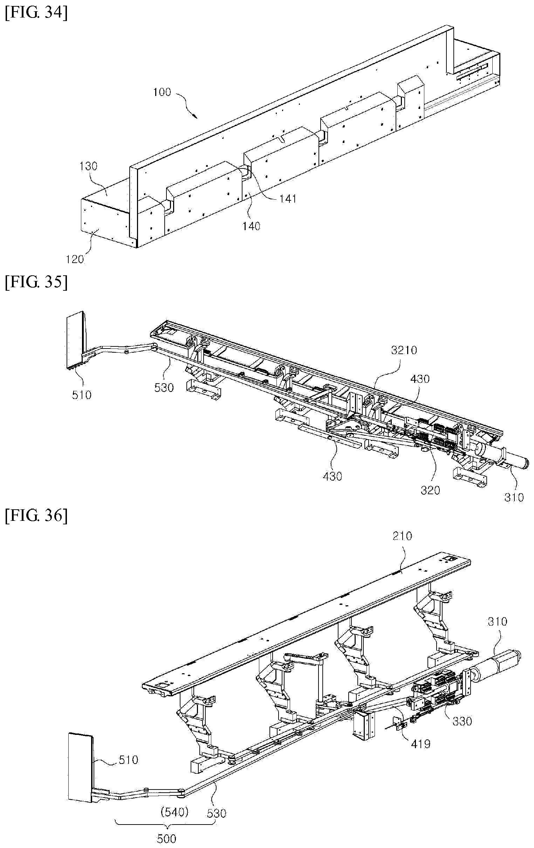

The housing unit 100 (see FIGs. 32 to 34) includes a housing body 110, a housing front cover 120, a housing base cover 130, and a housing guide cover 140. The housing front cover 120, the housing base cover 130, and the housing guide cover 140 are respectively mounted on a side of the housing body 110, a bottom mounting surface of the platform P, and a bottom mounting surface of the platform P, which is oriented toward a vehicle moving region to define a space that accommodates other constituent elements. The housing guide cover 140 is disposed at a front lower end of the housing front cover 120. The housing guide cover 140 includes an inclined face 141 (see FIG. 34) so that when a foldable step inner folding support part 220 rotates, an interference with other constituent elements can be excluded, and simultaneously a region where the housing front cover 120 is exposed to the outside can be covered.

The driving unit 300 (see FIG. 32) includes a driving motor 310 disposed at the housing unit 100, a driving shaft 320, and a driving block 330. The driving shaft 320 is connected to the driving motor 310 so as to be arranged in the vehicle entry direction of the platform P so that the driving shaft 320 can rotate by the rotational driving force generated from the driving motor 310. The driving block 330 takes a structure in which it is movable along the longitudinal direction of the driving shaft 320. This configuration is the same as that in the above-described embodiment. In this embodiment, the driving shaft and the driving block of the driving unit are of a ball screw type, but the driving unit may be configured in various manners within a range of providing the rotational driving force to the foldable step unit through the transmission unit which will be described later.

The transmission unit 400 serves to transmit the driving force generated from the driving unit 300 to the foldable step unit 200. The transmission unit 400 includes a transmission link body 410 and a transmission hole linkage 430. The transmission unit 400 according to one embodiment of the present invention may further include a transmission locking hook part 420. The transmission unit 400 performs a function similar to that in the above-described embodiment, but a detailed description of the structure thereof will be made later.

The transmission link body 410 is connected to one end of the driving unit 300. That is, the transmission link body 410 can form a structure in which is connected to one end of the driving unit 300 in a contactable manner so as to receive the driving force generated from the driving unit 300. Referring to FIGs. 36, 40 to 46, the transmission link body 410 includes a transmission link driving body 419 and a transmission link body plate 411.

The transmission link driving body 419 is connected at one end thereof to the driving unit 300 and transmits the rectilinear driving force by the driving unit 300 into a rotational driving force for application to other constituent elements.

The one end of the transmission link driving body 419 is connected to a driving block connection part 331 formed on the driving block 330 of the driving unit 300 in a relatively rotational manner, and the other end of the transmission link driving body 419 is connected to a transmission link driving body connection part 4191. The transmission link driving body connection part 4191 is rotatably connected to the housing unit 100 side through a transmission link driving body connection link 4195. In other words, the transmission link driving body 419, the transmission link driving body connection part 4191, and the transmission link driving body connection link 4195 of the transmission link body 410 are disposed between the driving block 330 of the driving unit 300 and the housing unit 100.

The driving force is directly transmitted through the transmission link driving body 419 connected to the driving block 310 of the driving unit 300. The driving force is transmitted to the transmission link driving body connection link 4195 rotatably fixed to the housing unit 100 through the transmission link driving body 419 and the transmission link driving body connection part 4191. The transmission link driving body connection link 4195 may transmit the driving force from the driving unit 300 to the transmission link body plate 411 through a structure of enabling to release the connection to the transmission link body plate 411. In this embodiment, the transmission link driving body 419 has been implemented as a rectilinear link, but may be modified in various manners depending on the design specifications.

The transmission link body plate 411 is rotatably mounted at one side thereof to the housing unit 100 and contactably disposed at the other side thereof at the transmission link driving body 419. The transmission link body plate 411 forms a structure in which one side thereof is concentrically arranged with transmission link driving body connection link 4195. The transmission link body plate 411 is connected to a foldable step unfolder shaft 231 of the foldable step unfolder 230 so as to rotate together with the foldable step unfolder shaft 231.

The transmission link body plate 411 forms a structure in which the other side thereof can be bought into close contact with the transmission link driving body 419 and the connection of the other side of the transmission link body plate 411 with the transmission link driving body 419 can be released through the transmission locking hook part 420. The operation of the driving unit 300 allows for the operation of the transmission link driving body 419 connected at both ends to the transmission link driving body connection link 4195 and the driving block connection part 331, respectively, which also allows for the operation of the transmission link body plate 411 so that the transmission hole linkage 430 can rotate or move relative to the transmission link body plate 411 within a preset angular range. Thus, a predetermined driving force is transmitted to the foldable step unit 200 through the transmission hole linkage 430.

The transmission link body plate 411 of the transmission link body 410 is implemented as a double-plate structure in which two plates are arranged in parallel with each other, and a transmission link body spacer 413 is disposed between the two plates so that a space is defined therebetween. As described below, this structure can allow for a structure in which the operation of the transmission locking hook part 400 is facilitated and an interference with other constituent elements is excluded in the case where the transmission unit 400 further includes a transmission locking hook part 420. In addition, it is possible to form a structure of excluding an interference during the operation of the safety unit 500 which will be described later.

Disposed on one surface of the transmission link body 411, is a transmission hole linkage locker rod 4373 of a transmission hole linkage locker 437 for a connection permitting a relative rotation with respect to the transmission hole linkage body 433 of the transmission hole linkage 430 which will be described later.

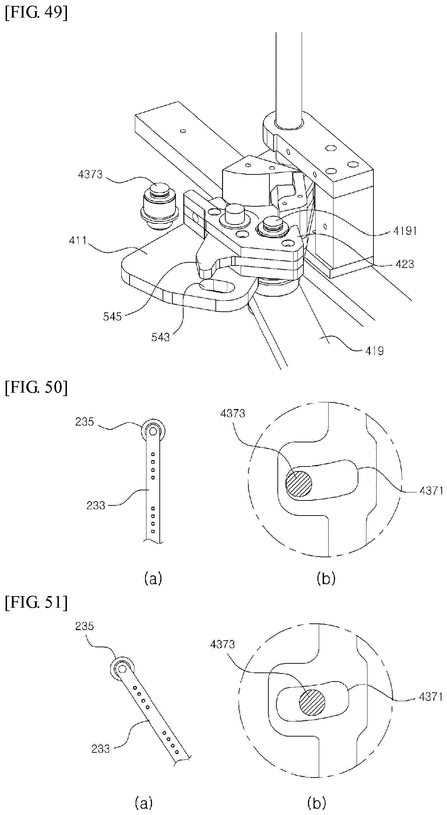

In addition, the transmission link body plate 411 may have a safety traction hole 543 (see FIG. 49) as a constituent element of the safety traction part 540, which is formed at one side thereof, i.e., at an outside of a region where the transmission hole linkage locker rod 4373 is disposed.

In this embodiment, the foldable step inner folding support part 220 is provided in plural numbers, and the transmission unit 400 includes the transmission hole linkage 430 so as to operate the plurality of the foldable step inner folding support parts 220 on a batch basis.

The transmission hole linkage 430 can be brought into close contact with the transmission link body 410, and is connected at one end thereof to the foldable step inner folding support part 220. The transmission hole linkage 430 and the transmission link body 410 form a confining structure in which they can be brought into close contact with each other and can perform a relative rotation or movement within a preset range.

The transmission link body 410 of the transmission unit 400 is releasably connected to the driving unit 300 through the transmission locking hook part which will be described later. The transmission hole linkage 430 of the transmission unit 400 is connected to the foldable step unit 200, and the transmission hole linkage 430 and the transmission link body 410 form a confining structure in which they can be brought into close contact with each other, but permit only a limited relative rotation or movement within a preset range so that a sequential or stepwise operation is achieved which employs the foldable step unfolder 220 which will be described later through the permission of the relative rotation or movement between the transmission hole linkage 430 and the transmission link body 410 in an initial drive stage. In addition, after the initial drive stage, the foldable step inner folding support part 220 of the foldable step unit 200 can be operated through a limited cooperative operation between the transmission link body plate 411 of the transmission link body 410 and the transmission hole linkage 430, and ultimately the initial drive structure can be implemented as a simple and definite transmission structure, thereby leading to miniaturization of the constituent elements and thus to minimization of a problem associated with erroneous operation possibility and maintainability.

As described above, the foldable step inner folding support part 220 of the foldable step unit 200 of the present invention may take a structure in which it is provided in plural numbers. In this case, the transmission hole linkage 430 may transmit the driving force applied thereto from the driving force to a plurality of foldable step inner folding support parts 220 on a batch basis.

In the case an unwanted external force is applied to the safety impact bar 500 of the safety unit 500, only a predetermined relative rotation or operation is permitted for the transmission link body plate 411 operated in cooperation with the safety unit 500 and the transmission hole linkage 430 confiningly connected operates the plurality of the foldable step inner folding support parts 220 on a batch basis to prevent a damage due to a collision between a railway vehicle entering the platform and the foldable step unit 200. In addition, the transmission hole linkage 430 forms a structure in which it can be separated from the driving unit 300 through the transmission link body 410 so that the application of the external force to the driving unit 300 side is interrupted to protect the entire system, thereby ensuring maintainability.

The transmission hole linkage 430 includes a transmission hole step body 431, a transmission hole linkage body 433, and a transmission hole linkage locker 437.

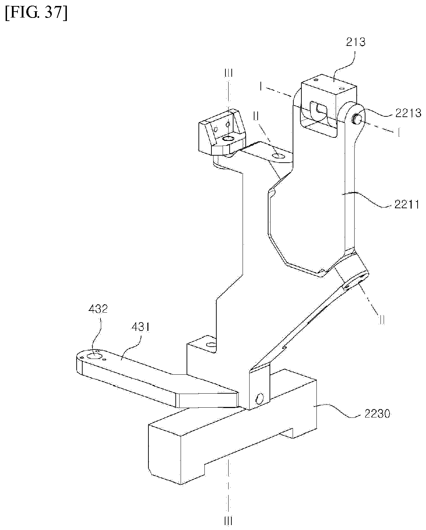

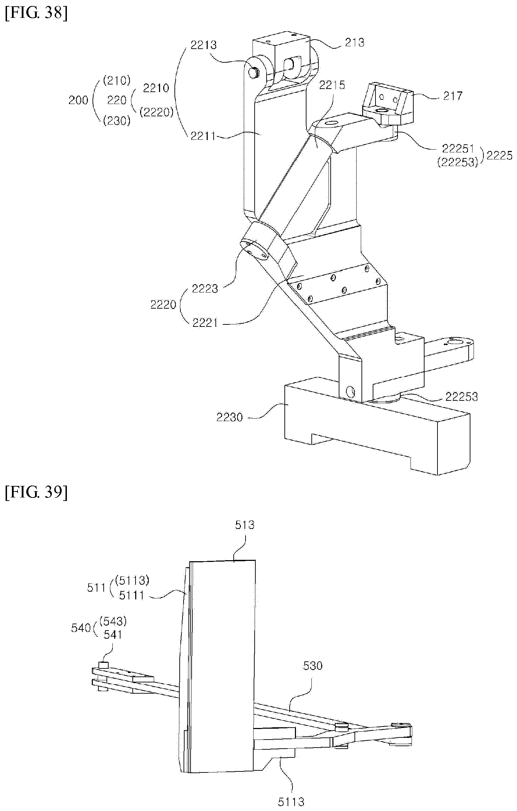

A configuration in which the transmission hole step body 431 is connected at one end thereof to the foldable step inner folding support part 220 is the same as that in the above-described embodiment. The transmission hole step body 431 is fixedly connected at one end thereof to an inner folding lower housing bottom connection part 22253 side (see FIGs. 37 and 38) of an inner folding lower housing connection part 2225 that is formed at a lower end of the foldable step inner folding support part 220 and rotates relative to an inner folding lower base holder 2230 fixed in position to the housing unit 100. The transmission hole step body 431 is formed as a bent-shaped link having a predetermined included angle so as to rotate together with the foldable step inner folding support part 220, but the present invention is not limited thereto.

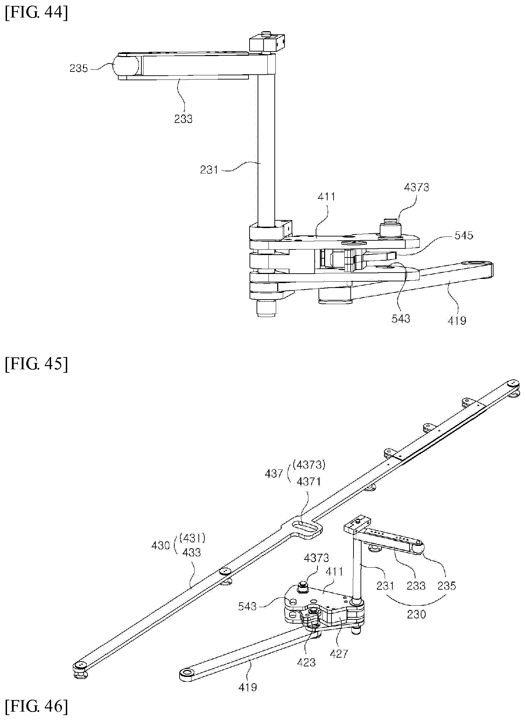

The transmission hole linkage body 433 (see FIGs. 45 and 46) is connected to transmission hole step body 431 in a relatively rotational manner. The transmission hole linkage body 433 is formed as a rectilinear link. In this embodiment, the transmission hole linkage body 433 takes a structure in which it is connected to the transmission hole step body 431 connected to the plurality of the foldable step inner folding support parts 220 in a relatively rotational manner.

The transmission hole linkage body 433 has a plurality of transmission hole linkage body connection through-holes 434 formed thereon so that a transmission hole linkage body connection part 435 is disposed at each transmission hole linkage body connection through-hole 434. By virtue of this configuration, the transmission hole linkage body 433 is connected to one or more transmission hole step bodies 431. In other words, each foldable step inner folding support part 220 is connected to the transmission hole step body 431, the transmission hole linkage body 433 has the transmission hole linkage body connection through-holes 434, and the transmission hole linkage body connection part 435 is mounted at the linkage body connection through-hole 434.

Thus, when the transmission hole linkage body 433 is moved, the plurality of the foldable step inner folding support part 220 connected to each other by means of the transmission hole step body 431 can be moved integrally together.

The transmission hole linkage locker 437 is connected at one end thereof to the transmission hole linkage body 433 and disposed at the other end thereof at the transmission link body plate 411 so that a relative rotation or movement between the transmission hole linkage 430 and the transmission link body plate 411 of the transmission link body 410 is permitted within a preset range, i.e., a preset angular range, and a confined cooperative operation therebetween is performed in a range beyond the corresponding preset range

In other words, the transmission hole linkage locker 437 includes a transmission hole linkage locker hole 4371 and a transmission hole linkage locker rod 4373. The transmission hole linkage locker hole 4371 is formed in a rectangular shape and is disposed at the transmission hole step body 433. The transmission hole linkage locker rod 4373 is disposed at the transmission link body plate 411 and is movably inserted into transmission hole linkage locker hole 4371. As shown in FIGs. 45 and 46, the transmission hole linkage locker rod 4373 is insertingly disposed at transmission hole linkage locker hole 4371, and is disposed on one side of the transmission link body plate 411 in such a manner as to be fixed in position. The transmission hole linkage locker hole 4371 has a rectangular hole structure, i.e., a structure in which the transmission hole linkage locker rod 4373 can perform a relative movement or rotation with respect to the transmission hole linkage locker hole 4371 along the transmission hole linkage locker hole 4371 so that a relative movement occurs between the transmission hole linkage locker hole 4371 and the transmission hole linkage locker rod 4373 within a predetermined range, but a confined operation is performed therebetween by the abutment or engagement therebetween if the range is beyond the predetermined range.

As described above, the transmission link driving body 419 is connected at one side thereof to the driving unit 300 and transmits the rectilinear driving force caused by the driving unit 300 as a rotational driving force. The transmission link body plate 411 is disconnected at one side thereof from the transmission link driving body 419 through the transmission locking hook part 420 which will be described later. If the transmission link body plate 411 is connected at one side thereof to the transmission link driving body 419 through the transmission locking hook part 420, the other side of the transmission link 411 receives the driving force from the driving unit 300 through the transmission link driving body connection part 4191 to which the transmission link driving body connection link 4195 and the transmission link driving body 419 rotatably connected to the housing body 110 are connected. By virtue of this configuration, an external force can be transmitted by the contact between the transmission hole linkage locker hole 4371 and the transmission hole linkage locker rod 4373 formed at the transmission link body plate 411.

The transmission unit 400 according to one embodiment of the present invention performs a relative movement between the transmission hole linkage locker hole 4371 and the transmission hole linkage locker rod 4373 formed at the transmission link body plate 411 within a preset range, and the foldable step unfolder 230 can provide a clearance to permit the initial drive of the foldable step plate through the achievement of the engagement or abutment between the transmission hole linkage locker rod 4373 if the range is beyond the predetermined range.

Meanwhile, the platform step device according to this embodiment may also further include a constituent element that maintains or releases a connection state between the driving unit and the foldable step unit. This configuration achieves a structure which enables a stable folding and unfolding operation of the foldable step unit at normal times and the folding operation of the foldable step unit in the event of an emergency situation, prevents a damage of the driving unit due to the transmission of an external force to the driving unit 300, and completely or substantially avoid a possibility of occurrence of safety accidents.

The transmission locking hook part 420 forms an engagement and disengagement state inside the transmission link body 410. The transmission locking hook part 420 forms an engagement and disengagement state between the transmission link driving body 419 and the transmission link body plate 411. The transmission locking hook part 420 includes a transmission locking hook body 421, a transmission locking hook 423, and a transmission locking hook body rotation hinge 425.

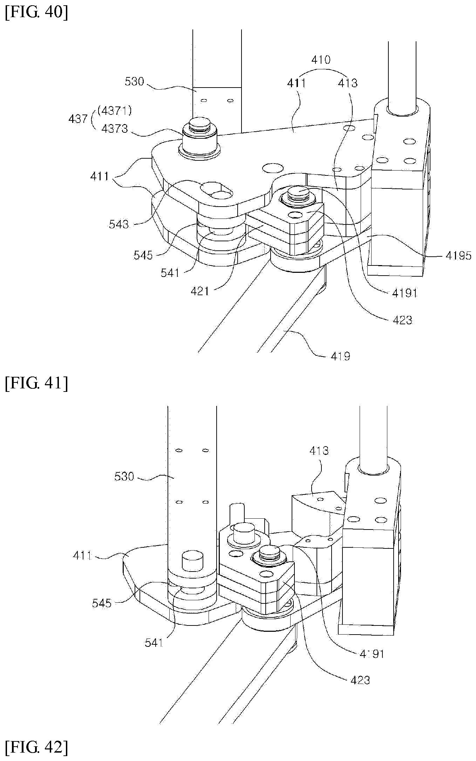

The transmission locking hook body 421 (see FIGs. 40 to 42) is rotatably mounted to the transmission link body plate 411, and the transmission locking hook body rotation hinge 425 allows the transmission locking hook body 421 to be rotatably mounted to the transmission link body plate 411 so that the transmission locking hook body 421 can rotate around the transmission locking hook body rotation hinge 425 relative to the transmission link body plate 411. In this embodiment, as described above, the present invention achieves a structure in which the transmission locking hook body is rotatably disposed in a space between two parallel transmission link body plates 411.

The transmission locking hook 423 is formed at an end of the transmission locking hook body 421, and takes a structure in which it can be engaged with one side of transmission link driving body 419. In this embodiment, the transmission locking hook 423 has an arrowhead shape to form a retaining structure with the transmission link driving body connection part 4191 of the transmission link body 410. By virtue of this retaining structure, the transmission link driving body connection part 4191 forms a retaining structure by the contact with the transmission locking hook 423 and a side of the transmission link body plate 411 so that when the driving block of the driving unit performs a rectilinear forward and backward motion, a smooth cooperative operation can be performed regardless of the transfer direction.

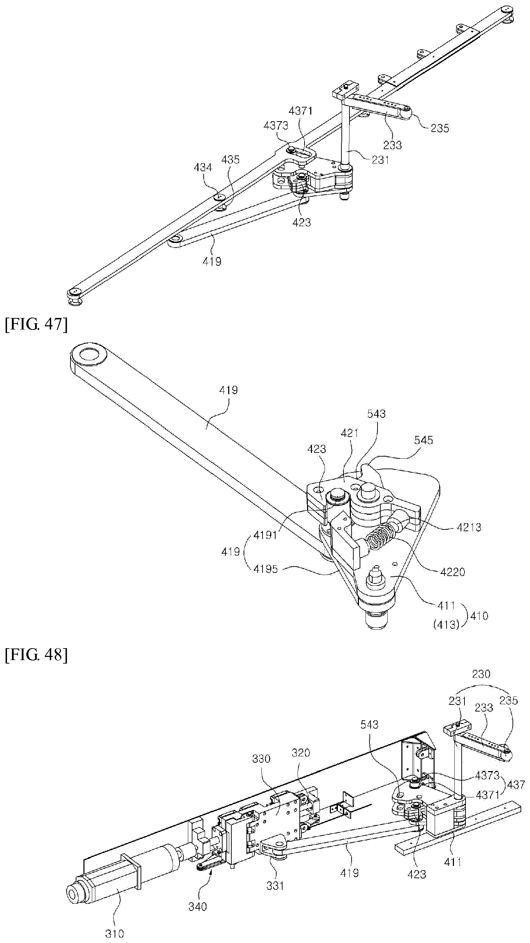

In addition, the transmission locking hook part 420 may further include a constituent element for maintaining the engagement state with the transmission hole linkage locker 437 under a constant condition. That is, the transmission locking hook part 420 includes a transmission locking hook body elastic part 4220(see FIG. 47). The transmission locking hook body elastic part 4220 is connected at one end thereof to the transmission link body plate 411 side and connected at the other end thereof to the transmission locking hook body 421 to provide an elastic force that elastically supports the transmission locking hook body 421 in a predetermined direction.

The transmission locking hook body 421 includes a transmission locking hook body elastic mounting part 4213 formed thereon. The transmission locking hook body elastic part 4220 is supported at one end thereof at the inside of transmission locking hook body elastic accommodating part 4213 in a state of being accommodated in the transmission locking hook body elastic accommodating part 4213 and supported at the other end thereof by the transmission link body plate 411 side or the transmission link body spacer 413 so as to provide a predetermined elastic force to the transmission locking hook body 421 and ultimately maintain or release the connection state between the transmission link body 410 side and the transmission hole linkage 430 under a constant condition so that a stable cooperative operation can be achieved and simultaneously a possibility of occurrence of an unwanted damage of the driving unit and a safety accident can be avoided or reduced.

The platform step device 10 according to one embodiment of the present invention includes a foldable step unit 200. The foldable step unit 200 includes a foldable step inner folding support part 220 and a foldable step plate 210. The foldable step plate 210 forms a structure in which it is folded toward the bottom side of the platform, which confronts a vehicle entry space. The foldable structure of the foldable step plate 210 is substantially the same as that in the above-described embodiment.

The foldable step inner folding support part 220 is operated inside the housing unit 100 by means of the driving force generated from the driving moto 310 of the driving unit 300 and transmitted thereto through the transmission unit 400. The foldable step plate 210

The foldable step inner folding support part 220 is operated inside the housing unit 100 by means of the driving force generated from the driving motor 310 of the driving unit 300 and transmitted thereto through the transmission unit 400. The foldable step plate 210 takes a structure in which it is at least connected to the foldable step inner folding support part 220 so as to rotate around a rotational axis formed along a longitudinal direction parallel to the longitudinal direction of the platform in response to the operation of the foldable step inner folding support part such that the foldable step plate can be collapsibly folded, withdrawn, and accommodated.

The foldable step inner folding support part 220 of the present invention includes a plurality of rotational axes I-I, II-II, and III-III (see FIG. 37) arranged in non-parallel with each other when projected on a plane perpendicular to the vehicle entry direction of the platform P at the time of completely unfolding the foldable step plate 210. The foldable step inner folding support part 220 is formed as a double-plate type link structure connected between the foldable step plate 210 and the housing unit 100 in such a manner that the rotational axes of a connection hinge structure have a constant angle therebetween to form a plurality of rotational axes I-I, II-II, and III-III as described below.

More specifically, as shown in FIGs. 34 to 38, the foldable step inner folding support part 220 include an inner folding upper support 2210 and an inner folding lower support part 2220. The inner folding upper support 2210 is connected at one end thereof to the foldable step plate 210 in a relatively rotational manner. The inner folding lower support part 2220 is connected at one end thereof to the other end of the inner folding upper support 2210 in a relatively rotational manner and rotatably connected at other end thereof to the housing unit 100. This structure of the foldable step inner folding support part 220 is substantially the same as that in the above-described embodiment.

The inner folding upper support 2210 includes an inner folding upper support body 2211. The inner folding upper support body 2211 includes an inner folding upper support plate connection part 2213 formed at an upper end thereof and an inner folding upper lower connection part 2215 formed at an lower end thereof. The foldable step plate 210 includes a foldable step plate connection part 213 formed at a lower end thereof. The inner folding upper support plate connection part 2213 is connected to the foldable step plate connection part 213 in a relatively rotational manner to form a structure of rotating around a rotational axis formed by the line I-I (see FIG. 37). Under the circumstances, the platform P which a railway vehicle enters may be formed as a curved structure, but a region where the platform step device 10 is substantially positioned can be modified in various manners, such as being formed as a substantial rectilinear structure at a tangential region of a curved railroad track.

The inner folding lower support part 2220 includes an inner folding lower support body 2221. The an inner folding lower support body 2221 includes an inner folding lower support upper connection part 2223 formed at an upper end thereof, and an inner folding lower support housing connection part 2225 formed at a lower end thereof (substantially, a lower end and a side thereof.

The inner folding lower support upper connection part 2223 is rotatably connected to the inner folding upper lower connection part 2215 to form a connection structure in which it rotates around a rotational axis formed by the line II-II (see FIG. 37). The line II-II forms a structure of having a constant angular relationship when the foldable step plate 210 is completely unfolded with respect to the line I-I (see FIG. 37) .

The inner folding lower support housing connection part 2225 is disposed at a lower end, substantially, a side and a lower end of the inner folding lower support body 2221. The inner folding lower support housing connection part 2225 includes an inner folding lower support housing top connection part 22251 and an inner folding lower support housing bottom connection part 22253. The housing unit 100 includes a folding housing connection part 217 and an inner folding lower base holder 2230 that are fixed in position so as to correspond to the inner folding lower support housing top connection part 22251 and the inner folding lower support housing bottom connection part 22253. The inner folding lower support housing connection part 2225 and the housing unit 100 form a structure in which the folding housing connection part 217 and the inner folding lower base holder 2230 are rotatably connected to the inner folding lower support housing top connection part 22251 and the inner folding lower support housing bottom connection part 22253, respectively. A structure in which the inner folding lower support housing connection part 2225 is connected to the housing unit through the inner folding lower base holder 2230 may take a structure in which the inner folding lower base holder 2230 is fixedly mounted to the housing unit 100 side and the inner folding lower support housing bottom connection part 22253 is rotatably mounted to the inner folding lower base holder 2230 as shown in FIG. 23 in a partially projected manner.

The other end, i.e., the side and lower end of the inner folding lower support part 2220 forms a structure of having a rotational axis (i.e., the line III-III) perpendicular to the ground surface. In other words, the present invention form a structure in which the folding housing connection part 217 and the inner folding lower base holder 2230 are rotatably connected to the inner folding lower support housing top connection part 22251 and the inner folding lower support housing bottom connection part 22253, respectively, so that they rotate around the rotational axis formed by the line III-III. This structure is a structure of being substantially perpendicular to the ground surface so that it forms a position-fixed rotational axis unlike the line I-I and the line II-II.

By virtue of this structure, in the case where a stepping-enabling state is formed in which the foldable step plate 210 is completely unfolded to allow passengers to step thereon, a rotational axis (i.e., the line I-I) between the foldable step plate 210 and the inner folding upper support 2210, a rotational axis (i.e., the line II-II) between the inner folding upper support 2210 and the inner folding lower support 2220, and a rotational axis (i.e., the line III-III) between the inner folding lower support part 2220 and the housing unit 100 are positioned on the same plane perpendicular to the longitudinal direction of the platform P in such a manner as to cross each other at one point, thereby achieving a mechanical relationship allowing for a smooth foldable structure.

The foldable step inner folding support part 220 of the present invention is provided in single number or plural numbers. The inner folding lower support part 2220 is connected at a lower end thereof to the transmission hole step body 431 of the transmission hole linkage 430 of the transmission unit 400 and rotates together with the transmission hole step body 431, and the transmission hole step body 431 is rotatably connected at the other end thereof to the transmission hole linkage body 431 through a transmission hole linkage body lower connection part 432 so that the foldable step inner folding support part 220 can achieve a structure of enabling an integrally rotatable operation.

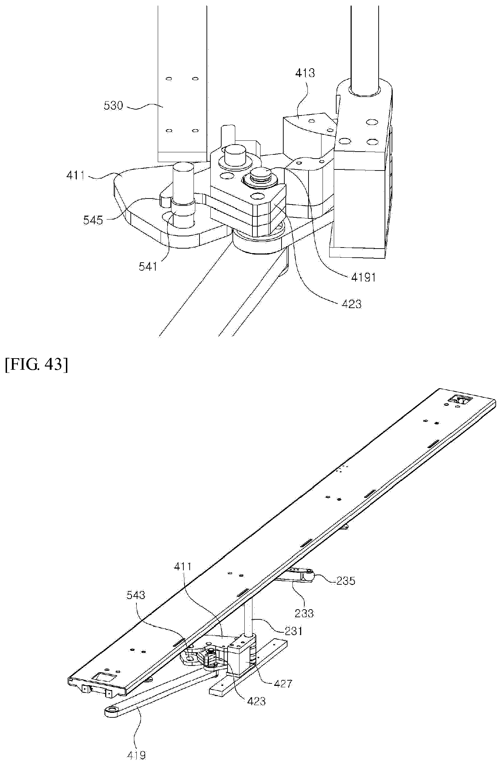

Also, meanwhile, the present invention may further include a constituent element that ensures the smoothness of an initial drive of the foldable step plate when the foldable step inner folding support part 220 is completely unfolded. The foldable step unit 200 includes a foldable step unfolder 230 (see FIGs. 43 to 46 and 48) that is disposed between the foldable step plate 210 and the transmission unit 300 and provides an unfolding force for enabling the unfolding of the foldable step plate 210 around the rotational axis therebetween.

Also, meanwhile, the present invention may further include a constituent element that ensures the smoothness of an initial drive of the foldable step plate when the foldable step inner folding support part 220 is completely unfolded. The foldable step unit 200 includes a foldable step unfolder 230 (see FIGs. 43, 46 and 48) that is disposed between the foldable step plate 210 and the housing unit 100 and provides an unfolding force for enabling the unfolding of the foldable step plate 210 around the rotational axis therebetween.

The foldable step unfolder 230 includes a foldable step unfolder shaft 231 and a foldable step unfolder linkage 233. The foldable step unfolder shaft 231 is connected to the transmission link body plate 411 so as to rotate together with the transmission link body plate 411. The foldable step unfolder linkage 233 is disposed at the foldable step unfolder shaft 2310 in such a manner as to extend radially from a rotational axis, and an end side of the foldable step unfolder linkage 233 forms a structure in which it can be brought into close contact with the bottom surface of the foldable step plate 210. In other words, during the initial drive of the platform step device, when an initial driving force from the driving unit 300 is applied to the platform step device, the driving force generated from the driving motor 310 of the driving unit 300 rectilinearly moves a drive moving block 330, and the transmission link driving body 419 connected to a drive moving block connection part 331 of the drive moving block 330 is connected to the transmission link driving body connection link 4195 through the transmission link driving body connection part 4191 to implement a predetermined link operation. The transmission link driving body connection part 4191 forms a state of being engaged with the transmission locking hook 423 formed at an end of the transmission locking hook body 421 of the transmission locking hook part 420 disposed at the transmission link body plate 411 so that the transmission link body plate 411 performs a predetermined displacement. At an initial drive stage, since the range is within a preset angular range, a relative movement is achieved between the transmission hole linkage locker hole and the transmission hole linkage locker rod 4373 of the transmission hole linkage locker part 437, and thus the transmission of the driving force of the driving unit 300 along a path extending to the foldable step inner folding support part 220 via the transmission link body plate 411 and the transmission hole step body 431 temporarily forms a pending state.

However, the driving force generated from the driving unit 300 at an initial drive stage according to the embodiment of the present invention is transmitted to the foldable step plate 210 through the foldable step unfolder 230. In other words, the foldable step unfolder shaft 231 is connected to the transmission link body plate 411 and rotates together with the transmission link body plate 411 so that during the initial drive of the driving unit 300, an initial driving force that is not transmitted to the transmission hole step body 431 forms a rotational state of the foldable step unfolder shaft 231 connected to the transmission link body plate 411, and the foldable step unfolder linkage 233 connected to the foldable step unfolder shaft 231 also rotates together with the foldable step unfolder shaft 231. The foldable step unfolder linkage 233 forms a state in which it can be brought into close contact with the bottom surface of the foldable step plate 210. The foldable step unfolder linkage 233 directly moves the foldable step plate 210 which is difficult to move by its own weight in a collapsibly folded state by upwards pushing the foldable step plate 210 from the bottom by an additionally transmitted driving force.

Under the circumstances, the foldable step plate 210 includes a foldable step unfolder roller 235 disposed at an end thereof. The foldable step unfolder roller 235 takes a structure in which it is directly brought into close contact with the bottom surface of the foldable step plate 210 so that a smooth relative movement between the foldable step plate 210 and the foldable step unfolder roller 235is achieved while performing the transmission of the driving force therebetween.

In the meantime, the transmission hole linkage locker hole 4371 is formed in a rectangular shape. When an initial operation starts from a state in which the foldable step plate is completely folded, the transmission hole linkage locker rod 4373 may perform a relative translational movement from an initial position inside the transmission hole linkage locker hole 4371 along with the rotation of the transmission link body plate 411, and the foldable step unfolder linkage may initially operate the foldable step plate by the rotation of the foldable step unfolder shaft 231. In addition, when the transmission hole linkage locker rod 4373 is positioned at a position opposite to the initial position of the transmission hole linkage locker hole 4371, the driving force from the driving unit can be transmitted to the transmission hole linkage body 431 through the transmission hole linkage locker rod 4373.

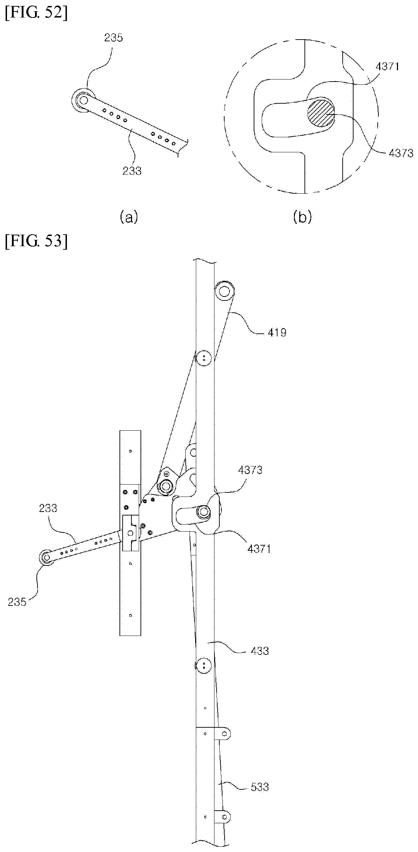

That is, the driving force generated from the driving unit 300 allows the foldable step unfolder shaft 231 connected to the transmission link body plate 411 to rotate the transmission link driving body 419 connected to the drive moving block connection part 331 formed at the drive moving block 330, and the foldable step unfolder linkage 233 connected to the foldable step unfolder shaft 231 rotates together with the foldable step unfolder shaft 231. The foldable step unfolder roller 235 disposed at an end of the foldable step unfolder linkage 233 transmits the driving force while pressing the bottom surface of the foldable step plate 220 (see FIG. 50). In FIGs. 50 to 53, there is shown (a) the arrangement state of the foldable step and (b) the positional relationship between the transmission hole linkage locker hole 4371 and the transmission hole linkage locker rod 4373.

When the bottom surface of the foldable step plate 210 is pressed by foldable step unfolder roller 235 to transmit the driving force, the foldable step plate 210 is connected to the plurality of the foldable step inner folding support parts 220 which is in turn connected to the transmission hole linkage 430. Thus, the driving force transmitted through the foldable step unfolder linkage 233 and the foldable step unfolder roller 235 is transmitted to the transmission hole linkage 430 through the plurality of the foldable step inner folding support parts 220. A relative movement or rotation occurs between the transmission hole linkage 430 and the transmission link body plate 411 within the preset angular range.

Thereafter, the driving force from the driving unit 300 continuously operates the foldable step plate 210. Then, if a relative movement or rotation, i.e., a relative translational movement is performed between the transmission hole linkage locker hole 4371 and the transmission hole linkage locker rod 4373 of the transmission hole linkage locker part 347 and then there occurs the engagement or abutment therebetween beyond the predetermined angular range, the driving force from the driving unit 300 directly operates the transmission hole step body 341 from the transmission link body plate 411 through the transmission hole linkage locker part 347, and directly operates the foldable step plate 210 through the foldable step inner folding support part 220 connected to the transmission hole step body 341.

As such, the initial drive of the foldable step plate is performed by the foldable step unfolder that is arranged in parallel with the longitudinal direction of the platform and then rotates in a counterclockwise direction on the drawing sheet as shown FIG. 50(a). If the foldable step plate reaches a predetermined unfolding angle, i.e., the foldable step plate is positioned at a region where the transmission hole linkage locker hole 4371 and the transmission hole linkage locker rod 4373 forms a mutual engagement or abutment state beyond the preset angular range of permitting a relative movement or rotation between the transmission hole linkage locker hole 4371 and the transmission hole linkage locker rod 4373, the foldable step plate takes a structure in which it is unfolded through the transmission hole step body 341 (see FIGs. 51 to 53).

As described above, in this embodiment, a gap for the cooperative operation is formed between the transmission hole step body 341 and the transmission link body plate 411 and the driving force from the driving unit is directly used to achieve the initial unfolding operation of the foldable step plate, unlike the above-described embodiment so that the initial unfolding operation can be implemented in a more definite manner.

Also, meanwhile, similarly to the above-described embodiment, the platform step device 10 according to this embodiment of the present invention may also further include the safety unit 500 (see FIGs. 35, 36 and 39) as a safety feature. The safety unit 500 further includes a safety impact bar 510 that is positioned prior to the arrangement of the foldable step plate 210 in the longitudinal direction of the platform to allow the foldable step plate 210 to be collapsibly folded by an impact force due to the line contact with the vehicle when the railway vehicle enters the platform P while the foldable step plate 210 is unfolded due to an erroneous operation. The safety impact bar 510 includes a safety impact bar body 511. The safety impact bar body 511 includes an impact bar upper body 5111 and an impact bar lower body 5113.

The impact bar upper body 5111 forms a structure in which it is disposed spaced apart from the foldable step inner folding support part 220 in the longitudinal direction of the platform P, i.e., the entry direction of the vehicle in such a manner as to be positioned at a front end of the platform, i.e., at the foremost side of the platform where the vehicle enters so that the impact bar upper body 5111 can be brought into close contact with the vehicle. The impact bar lower body 5113 is connected to the impact bar upper body 5111 in such a manner as to be rotatably mounted to the housing unit 100 and connected to the transmission link body 410 of the transmission unit 400.

In addition, the impact bar upper body 5111 may include an upper body buffering part 513 formed on a front surface thereof, i.e., on one side thereof which oriented toward the railway vehicle that enters the platform. The upper body buffering part 513 has a predetermined shock-absorbing function to perform a buffering function at the time of collision between the vehicle and the impact bar upper body 5111 so that a possibility of damage of the impact bar upper body, and the like can be minimized.

The impact bar lower body 5113 is connected to the safety link 530 and is connected to the transmission link body plate 411 in a relatively rotatable or movable manner through the safety link 530. In addition, the impact bar lower body 5113 releases a connection with the driving unit 300 through the transmission locking hook part 420, i.e., a connection locking state of the transmission link body plate 411 and the transmission link driving body 419, and forcibly operates the transmission link body plate 411, thereby preventing a damage of the driving unit due to a forcible collapsible folding of the foldable step inner folding support part 220 through the transmission hole step body 431.

More specifically, the safety traction part 540 is formed at the safety link 530, the transmission link body plate 411, and the transmission locking hook body 421 and operates the transmission hole linkage 430 using a rotational force transmitted through the safety link 530 to forcibly collapsibly fold the foldable step plate 210.

The safety traction part 540 includes a safety traction pole 541 and a safety traction hole 543. The safety traction part 540 may further include a safety traction unlocking trigger 545 (see FIG. 49).
safety traction pole 541 disposed at an end of the safety link, and a safety traction hole 543 formed at the transmission link body plate 411 in such a manner as to be engaged with the safety traction pole 541 in a confinement manner.

The safety traction pole 541 is disposed at an end of the safety link 530, and the safety traction hole 543 is formed at the transmission link body plate 411 in such a manner as to be engaged with the safety traction pole 541 in a confinement manner. In other words, the safety traction hole 543 has a predetermined rectangular structure, and the safety traction pole 541 (see FIGs. 39 and 42) has a predetermined length so that both ends thereof is insertingly accommodated in the safety traction hole 543 formed on each transmission link body plate 411.

In the meantime, the safety traction unlocking trigger 545 is formed at a side of the transmission locking hook body 421 in such a manner as to be positioned spaced apart from the transmission locking hook 423 and brought into close contact with the safety traction pole 541, and receives a force from the safety traction pole 541 to transmit a rotational force to the transmission locking hook body 421 to cause the rotation of the transmission locking hook body 421 so that the engagement between the transmission locking hook 423 and the transmission link driving body connection part 4191 is released to ultimately release a direct transmission state with the driving unit 300.

Thereafter, the abutment or engagement is established between the safety traction pole 541 and the safety traction hole 543, and the rotational force is transmitted to the transmission link body plate 411 through the safety impact bar 510 and the safety link 530, and then to the transmission hole step body 431 from the transmission link body plate 411 through the transmission hole linkage locker part 437. Then, the rotational force is transmitted to the foldable step inner folding support part 220 connected to the transmission hole step body 431 to cause the foldable step inner folding support part 220 to forcibly collapsibly folds the foldable step plate 210 to complete a folding structure so that a possibility of collision between the platform step device and the vehicle can be prevented or blocked.

In addition, the safety unit 500 may further include the safety sensor 510(see FIG. 32) similarly to the above-described embodiment. The foldable step plate 210 has a foldable step plate sensor through-hole 211 formed thereon. The safety sensor 520 is implemented as a sensor such as a photosensor that detects the presence of a stepping object such as a passenger or baggage for application to a control unit (not shown) so that a safety accident can be prevented which may occur during the folding operation of the foldable step plate 210. The safety sensor 520 may take a structure in which it is disposed slantly to secure a sufficient sensing region while excluding protrusion. In this embodiment, the safety sensor 520 has been implemented as a photosensor, but it may be configured in various manners within a range of detecting the presence of the stepping object.

### INDUSTRIAL APPLICABILITY

The inventive platform step device mounted at a platform of a railway station can be utilized in other or household supplies or industrial facilities that minimize a gap between a mobile object and a stationary object, such as a subway station, a dock of a port, a bus platform, etc., besides the platform of the railway station.

## Claims

1. A platform step device (10) comprising:
a housing unit (100) disposed at a platform (P) in a position-fixed manner;
a driving unit (300) including a driving motor (310) disposed at the housing unit (100);
a transmission unit (400) configured to transmit a driving force generated from the driving unit (300); and
a foldable step unit (200)
comprising a foldable step inner folding support part (220) operated inside the housing unit (100) by means of the driving force of the driving unit (300), which is transmitted through the transmission unit (400), and a foldable step plate (210) connected at least to the foldable step inner folding support part (220) and configured to rotate around a rotational axis formed along a longitudinal direction parallel to that of the platform (P) in response to the operation of the foldable step inner folding support part (220) so that the foldable step plate (210) can be collapsibly folded, withdrawn, and accommodated,
**characterized in that**
the foldable step inner folding support part (220) comprises a plurality of rotational axes arranged in non-parallel with each other when projected on a plane perpendicular to the vehicle entry direction of the platform (P) at the time of completely unfolding the foldable step plate (210).

2. The platform step device (10) according to claim 1, wherein the foldable step inner folding support part (220) comprises:
an inner folding upper support (2210) connected at one end thereof to the foldable step plate (210) in a relatively rotational manner; and
an inner folding lower support part (2220) connected at one end thereof to the other end of the inner folding upper support (2210) in a relatively rotational manner and rotatably connected at other end thereof to the housing unit (100).

3. The platform step device (10) according to claim 1, wherein the foldable step unit (200) comprises a foldable step unfolder (230) disposed between the foldable step plate (210) and the housing unit (100) and configured to provide an unfolding force for enabling the unfolding of the foldable step plate (210) around the rotational axis therebetween.

4. The platform step device (10) according to claim 1, wherein the foldable step plate (210) comprises a safety unit (500) including a safety sensor (520) configured to detect a stepping object on the foldable step plate (210).

5. The platform step device (10) according to claim 1,
wherein the driving unit (300) generates a driving force enabling the movement of the foldable step plate (210) in a vehicle entry direction of the platform (P), and
wherein the transmission unit (400) transmits the driving force of the driving unit (300) to the foldable step unit (200) to rotate the foldable step folding support part in such a manner that an at least part of the transmission unit (400) releases the contact between the driving unit (300) and the foldable step unit (200).

6. The platform step device (10) according to claim 5, wherein the driving unit (300) comprises:
a driving motor (310) configured to generate the driving force for driving the foldable step unit (200);
a driving shaft (320) connected to the driving motor (310) so as to be arranged in the vehicle entry direction of the platform (P); and
a driving block (330) configured to be movable along the longitudinal direction of the driving shaft (320) and connected to the transmission unit (400).

7. The platform step device (10) according to claim 5, wherein the transmission unit (400)comprises:
a transmission link body (410) connected to one end of the driving unit (300); and
a transmission hole linkage (430) configured to be brought into close contact with the transmission link body (410), and connected at one end thereof to the foldable step inner folding support part (220).

8. The platform step device (10) according to claim 5, further comprising a safety unit (500) comprising a safety impact bar (510) positioned prior to the arrangement of the foldable step plate (210) in the longitudinal direction of the platform (P) to allow the foldable step plate (210) to be collapsibly folded by an impact force due to a line contact with a railway vehicle when the railway vehicle enters the platform (P) while the foldable step plate (210) is unfolded due to an erroneous operation.

9. The platform step device (10) according to claim 1, wherein the foldable step unit (200) further comprises a foldable step unfolder (230) disposed between the foldable step plate (210) and the transmission unit (400) and configured to provide an unfolding force for enabling the unfolding of the foldable step plate (210) around the rotational axis therebetween.

10. The platform step device (10) according to claim 9, wherein the transmission link body (410) comprises:
a transmission link driving body (419) connected at one end thereof to the driving unit (300) and configured to transmits a rectilinear driving force by the driving unit (300) as a rectilinear and rotational driving force; and
a transmission link body plate (411) rotatably mounted at one side thereof to the housing unit (100) and disposed at the other side thereof in such a manner as to be brought into close contact with the transmission link driving body (419).

11. The platform step device (10) according to claim 10, wherein the foldable step inner folding support part (220) is provided in plural number, and wherein the transmission hole linkage (430) comprises:
a transmission hole step body (431) connected at one end thereof to the foldable step inner folding support part (220);
a transmission hole linkage body (433) connected to the transmission hole step body (431) in a relatively rotational manner; and
a transmission hole linkage locker (437) connected at one side thereof to the transmission hole linkage body (433) and disposed at the other side thereof at the transmission link body plate (411) so that a relative rotation between the transmission hole linkage body (433) and the transmission link body plate (411) is permitted within a preset angular range.

12. The platform step device (10) according to claim 1,
wherein the driving unit (300) generates a driving force enabling the movement of the foldable step plate (210) in the vehicle entry direction of the platform (P), and
wherein the transmission unit (400) transmits the driving force of the driving unit (300) to the foldable step unit (200) to rotate the foldable step folding support part in such a manner that an at least part of the transmission unit (400) releases the contact between the driving unit (300) and the foldable step unit (200), and
wherein the transmission unit (400) comprises:
a transmission link body (410) connected to one end of the driving unit (300); and
a transmission hole linkage (430) configured to be brought into close contact with the transmission link body (410) in a relative movable manner within a preset confinement range, and connected at one end thereof to the foldable step inner folding support part

13. The platform step device (10) according to claim 12, wherein the transmission link body (410) comprises:
a transmission link driving body (419) connected at one end thereof to the driving unit (300) and configured to transmits a rectilinear driving force by the driving unit (300) as a rectilinear and rotational driving force; and
a transmission link body plate (411) rotatably mounted at one side thereof to the housing unit (100) and disposed at the other side thereof in such a manner as to be brought into close contact with the transmission link driving body (419).

14. The platform step device (10) according to claim 13, wherein the transmission unit (400) further comprises a transmission locking hook part (420) configured to form an engagement and disengagement state between the transmission link driving body (419) and the transmission link body plate (411).

## Patentansprüche

1. Bahnsteigtrittvorrichtung (10), die Folgendes umfasst:
eine Gehäuseeinheit (100), die bei einem Bahnsteig (P) positionsfest angeordnet ist;
eine Antriebseinheit (300), die einen Antriebsmotor (310) enthält, der bei der Gehäuseeinheit (100) angeordnet ist;
eine Übertragungseinheit (400), die konfiguriert ist, eine Antriebskraft, die von der Antriebseinheit (300) erzeugt wird, zu übertragen; und
eine klappbare Tritteinheit (200), die Folgendes umfasst:
einen klappbaren Trittklappinnenträgerteil (220), der in der Gehäuseeinheit (100) mittels der Antriebskraft der Antriebseinheit (300), die durch die Übertragungseinheit (400) übertragen wird, betätigt wird, und eine klappbare Trittplatte (210), die mindestens mit dem klappbaren Trittklappinnenträgerteil (220) verbunden ist und konfiguriert ist, sich in Reaktion auf die Betätigung des klappbaren Trittklappinnenträgerteils (220) um eine Drehachse, die in einer Längsrichtung parallel zum Bahnsteig (P) gebildet ist, zu drehen, derart, dass die klappbare Trittplatte (210) zusammenlegbar geklappt, zurückgezogen und aufgenommen werden kann,
**dadurch gekennzeichnet, dass**
der klappbare Trittklappinnenträgerteil (220) mehrere Drehachsen umfasst, die während des vollständigen Ausklappens der klappbaren Trittplatte (210), wenn sie auf eine Ebene, die zur Fahrzeugeinfahrrichtung des Bahnsteigs (P) senkrecht ist, projiziert werden, nicht parallel zueinander angeordnet sind.

2. Bahnsteigtrittvorrichtung (10) nach Anspruch 1, wobei der klappbare Trittklappinnenträgerteil (220) Folgendes umfasst:
einen oberen Klappinnenträger (2210), der an seinem einen Ende mit der klappbaren Trittplatte (210) relativ drehend verbunden ist; und
einen unteren Klappinnenträgerteil (2220), der an seinem einen Ende mit dem weiteren Ende des oberen Klappinnenträgers (2210) relativ drehend verbunden ist und der an seinem weiteren Ende mit der Gehäuseeinheit (100) drehbar verbunden ist.

3. Bahnsteigtrittvorrichtung (10) nach Anspruch 1, wobei die klappbare Tritteinheit (200) eine Klapptrittausklappeinrichtung (230) umfasst, die zwischen der klappbaren Trittplatte (210) und der Gehäuseeinheit (100) angeordnet ist und konfiguriert ist, eine Ausklappkraft bereitzustellen, um das Ausklappen der klappbaren Trittplatte (210) um die Drehachse dazwischen zu ermöglichen.

4. Bahnsteigtrittvorrichtung (10) nach Anspruch 1, wobei die klappbare Trittplatte (210) eine Sicherheitseinheit (500) umfasst, die einen Sicherheitssensor (520) enthält, der konfiguriert ist, ein tretendes Objekt an der klappbaren Trittplatte (210) zu detektieren.

5. Bahnsteigtrittvorrichtung (10) nach Anspruch 1, wobei
die Antriebseinheit (300) eine Antriebskraft erzeugt, die die Bewegung der klappbaren Trittplatte (210) in einer Fahrzeugeinfahrrichtung des Bahnsteigs (P) ermöglicht, und
die Übertragungseinheit (400) die Antriebskraft der Antriebseinheit (300) zur klappbaren Tritteinheit (200) überträgt, um den klappbaren Trittklappträgerteil derart zu drehen, dass mindestens ein Teil der Übertragungseinheit (400) den Kontakt zwischen der Antriebseinheit (300) und der klappbaren Tritteinheit (200) freigibt.

6. Bahnsteigtrittvorrichtung (10) nach Anspruch 5, wobei die Antriebseinheit (300) Folgendes umfasst:
einen Antriebsmotor (310), der konfiguriert ist, die Antriebskraft zum Antreiben der klappbaren Tritteinheit (200) zu erzeugen;
eine Antriebswelle (320), die mit dem Antriebsmotor (310) derart verbunden ist, dass sie in der Fahrzeugeinfahrrichtung des Bahnsteigs (P) angeordnet ist; und
einen Antriebsblock (330), der konfiguriert ist, in der Längsrichtung der Antriebswelle (320) beweglich zu sein, und mit der Übertragungseinheit (400) verbunden ist.

7. Bahnsteigtrittvorrichtung (10) nach Anspruch 5, wobei die Übertragungseinheit (400) Folgendes umfasst:
einen Übertragungsverbindungskörper (410), der mit einem Ende der Antriebseinheit (300) verbunden ist; und
eine Übertragungslochkopplung (430), die konfiguriert ist, mit dem Übertragungsverbindungskörper (410) in engen Kontakt gebracht zu werden, und an seinem einen Ende mit dem klappbaren Trittklappinnenträgerteil (220) verbunden ist.

8. Bahnsteigtrittvorrichtung (10) nach Anspruch 5, die ferner eine Sicherheitseinheit (500) umfasst, die eine Sicherheitsaufprallstrebe (510) umfasst, die vor der Anordnung der klappbaren Trittplatte (210) in der Längsrichtung des Bahnsteigs (P) positioniert wird, um zu ermöglichen, dass die klappbare Trittplatte (210) durch eine Aufprallkraft aufgrund einer Linienberührung mit einem Schienenfahrzeug zusammenlegbar geklappt wird, wenn das Schienenfahrzeug in den Bahnsteig (P) einfährt, während die klappbare Trittplatte (210) aufgrund eines fehlerhaften Betriebs ausgeklappt ist.

9. Bahnsteigtrittvorrichtung (10) nach Anspruch 1, wobei die klappbare Tritteinheit (200) ferner eine Klapptrittausklappeinrichtung (230) umfasst, die zwischen der klappbaren Trittplatte (210) und der Übertragungseinheit (400) angeordnet ist und konfiguriert ist, eine Ausklappkraft bereitzustellen, um das Ausklappen der klappbaren Trittplatte (210) um die Drehachse dazwischen zu ermöglichen.

10. Bahnsteigtrittvorrichtung (10) nach Anspruch 9, wobei der Übertragungsverbindungskörper (410) Folgendes umfasst:
einen Übertragungsverbindungsansteuerkörper (419), der an seinem einen Ende mit der Antriebseinheit (300) verbunden ist und konfiguriert ist, eine geradlinige Antriebskraft von der Antriebseinheit (300) als eine geradlinige und eine drehende Antriebskraft zu übertragen; und
eine Übertragungsverbindungskörperplatte (411), die auf ihrer einen Seite an der Gehäuseeinheit (100) drehbar montiert ist und auf ihrer weiteren Seite derart angeordnet ist, dass sie mit dem Übertragungsverbindungsansteuerkörper (419) in engen Kontakt gebracht wird.

11. Bahnsteigtrittvorrichtung (10) nach Anspruch 10, wobei der klappbare Trittklappinnenträgerteil (220) mehrfach vorgesehen ist und die Übertragungslochkopplung (430) Folgendes umfasst:
einen Übertragungslochtrittkörper (431), der an seinem einen Ende mit dem klappbaren Trittklappinnenträgerteil (220) verbunden ist;
einen Übertragungslochkopplungskörper (433), der mit dem Übertragungslochtrittkörper (431) relativ drehend verbunden ist; und
eine Übertragungslochkopplungssperre (437), die auf ihrer einen Seite mit dem Übertragungslochkopplungskörper (433) verbunden ist und auf ihrer weiteren Seite bei der Übertragungsverbindungskörperplatte (411) angeordnet ist, derart, dass eine relative Drehung zwischen dem Übertragungslochkopplungskörper (433) und der Übertragungsverbindungskörperplatte (411) in einem voreingestellten Winkelbereich zulässig ist.

12. Bahnsteigtrittvorrichtung (10) nach Anspruch 1, wobei
die Antriebseinheit (300) eine Antriebskraft erzeugt, die die Bewegung der klappbaren Trittplatte (210) in der Fahrzeugeinfahrrichtung des Bahnsteigs (P) ermöglicht,
die Übertragungseinheit (400) die Antriebskraft der Antriebseinheit (300) zur klappbaren Tritteinheit (200) überträgt, um den klappbaren Trittklappträgerteil derart zu drehen, dass mindestens ein Teil der Übertragungseinheit (400) den Kontakt zwischen der Antriebseinheit (300) und der klappbaren Tritteinheit (200) freigibt, und
die Übertragungseinheit (400) Folgendes umfasst:
einen Übertragungsverbindungskörper (410), der mit einem Ende der Antriebseinheit (300) verbunden ist; und
eine Übertragungslochkopplung (430), die konfiguriert ist, mit dem Übertragungsverbindungskörper (410) in einem voreingestellten Begrenzungsbereich relativ beweglich in engen Kontakt gebracht zu werden, und an ihrem einen Ende mit dem klappbaren Trittklappinnenträgerteil (220) verbunden ist.

13. Bahnsteigtrittvorrichtung (10) nach Anspruch 12, wobei der Übertragungsverbindungskörper (410) Folgendes umfasst:
einen Übertragungsverbindungsansteuerkörper (419), der an seinem einen Ende mit der Antriebseinheit (300) verbunden ist und konfiguriert ist, eine geradlinige Antriebskraft durch die Antriebseinheit (300) als eine geradlinige und eine drehende Antriebskraft zu übertragen; und
eine Übertragungsverbindungskörperplatte (411), die auf seiner einen Seite an der Gehäuseeinheit (100) drehbar montiert ist und auf seiner weiteren Seite derart angeordnet ist, dass sie mit dem Übertragungsverbindungsansteuerkörper (419) in engen Kontakt gebracht wird.

14. Bahnsteigtrittvorrichtung (10) nach Anspruch 13, wobei die Übertragungseinheit (400) ferner einen Übertragungssperrhakenteil (420) umfasst, der konfiguriert ist, einen Eingriffs- und Loslösungszustand zwischen dem Übertragungsverbindungsansteuerkörper (419) und der Übertragungsverbindungskörperplatte (411) zu bilden.

## Revendications

1. Dispositif de marche de quai (10) comportant :
une unité de boîtier (100) disposée sur un quai (P) d'une manière fixe en position ;
une unité d'entraînement (300) incluant un moteur d'entraînement (310) disposé sur l'unité de boîtier (100) ;
une unité de transmission (400) configurée pour transmettre une force d'entraînement générée à partir de l'unité d'entraînement (300) ; et
une unité de marche pliable (200)
comportant une partie de support pliante intérieure de marche pliable (220) actionnée à l'intérieur de l'unité de boîtier (100) au moyen de la force d'entraînement de l'unité d'entraînement (300), qui est transmise par l'intermédiaire de l'unité de transmission (400), et une plaque de marche pliable (210) reliée au moins à la partie de support pliante intérieure de marche pliable (220) et configurée pour tourner autour d'un axe de rotation formé le long d'une direction longitudinale parallèle à celle du quai (P) en réponse à l'actionnement de la partie de support pliante intérieure de marche pliable (220) de sorte que la plaque de marche pliable (210) peut être pliée, extraite et reçue de manière aplatissable,
**caractérisé en ce que**
la partie de support pliante intérieure de marche pliable (220) comporte une pluralité d'axes de rotation agencés de façon non parallèle les uns aux autres lorsqu'ils sont projetés sur un plan perpendiculaire à la direction d'entrée de véhicule du quai (P) au moment de déplier entièrement la plaque de marche pliable (210).

2. Dispositif de marche de quai (10) selon la revendication 1, dans lequel la partie de support pliante intérieure de marche pliable (220) comporte :
un support supérieur pliant intérieur (2210) relié, à une extrémité de celui-ci, à la plaque de marche pliable (210) d'une manière relativement rotative ; et
une partie de support inférieure pliante intérieure (2220) reliée, à une extrémité de celle-ci, à l'autre extrémité du support supérieur pliant intérieur (2210) d'une manière relativement rotative et reliée de manière rotative, à l'autre extrémité de celle-ci, à l'unité de boîtier (100).

3. Dispositif de marche de quai (10) selon la revendication 1, dans lequel l'unité de marche pliable (200) comporte un dispositif de dépliage de marche pliable (230) disposé entre la plaque de marche pliable (210) et l'unité de boîtier (100) et configuré pour fournir une force de dépliage pour permettre le dépliage de la plaque de marche et pliable (210) autour de l'axe de rotation entre ceux-ci.

4. Dispositif de marche de quai (10) selon la revendication 1, dans lequel la plaque de marche pliable (210) comporte une unité de sécurité (500) incluant un capteur de sécurité (520) configuré pour détecter un objet marchant sur la plaque de marche pliable (210).

5. Dispositif de marche de quai (10) selon la revendication 1,
dans lequel l'unité d'entraînement (300) génère une force d'entraînement permettant le mouvement de la plaque de marche pliable (210) dans une direction d'entrée de véhicule du quai (P), et
dans lequel l'unité de transmission (400) transmet la force d'entraînement de l'unité d'entraînement (300) à l'unité de marche pliable (200) pour faire tourner la partie de support pliante de marche pliable d'une manière telle qu'au moins une partie de l'unité de transmission (400) déclenche le contact entre l'unité d'entraînement (300) et l'unité de marche pliable (200).

6. Dispositif de marche de quai (10) selon la revendication 5, dans lequel l'unité d'entraînement (300) comporte :
un moteur d'entraînement (310) configuré pour générer la force d'entraînement pour entraîner l'unité de marche pliable (200) ;
un arbre d'entraînement (320) relié au moteur d'entraînement (310) de manière à être agencé dans la direction d'entrée de véhicule du quai (P) ; et
un bloc d'entraînement (330) configuré pour être mobile le long de la direction longitudinale de l'arbre d'entraînement (320) et relié à l'unité de transmission (400).

7. Dispositif de marche de quai (10) selon la revendication 5, dans lequel l'unité de transmission (400) comporte :
un corps de liaison de transmission (410) relié à une extrémité de l'unité d'entraînement (300) ; et
une tringlerie à trous de transmission (430) configurée pour être mise en contact direct avec le corps de liaison de transmission (410) et reliée, à une extrémité de celle-ci, à la partie de support pliante intérieure de marche pliable (220).

8. Dispositif de marche de quai (10) selon la revendication 5, comportant en outre une unité de sécurité (500) comportant une barre de choc de sécurité (510) positionnée avant l'agencement de la plaque de marche pliable (210) dans la direction longitudinale du quai (P) pour permettre à la plaque de marche pliable (210) d'être pliée de manière aplatissable par une force de choc due à un contact linéaire avec un véhicule ferroviaire lorsque le véhicule ferroviaire entre au quai (P) lorsque la plaque de marche pliable (210) est dépliée en raison d'un actionnement erroné.

9. Dispositif de marche de quai (10) selon la revendication 1, dans lequel l'unité de marche pliable (200) comporte en outre un dispositif de dépliage de marche pliable (230) disposé entre la plaque de marche pliable (210) et l'unité de transmission (400) et configuré pour fournir une force de dépliage pour permettre le dépliage de la plaque de marche pliable (210) autour de l'axe de rotation entre ceux-ci.

10. Dispositif de marche de quai (10) selon la revendication 9, dans lequel le corps de liaison de transmission (410) comporte :
un corps d'entraînement de liaison de transmission (419) relié, à une extrémité de celui-ci, à l'unité d'entraînement (300) et configuré pour transmettre une force d'entraînement rectiligne par l'unité d'entraînement (300) sous la forme d'une force d'entraînement rectiligne et rotative ; et
une plaque de corps de liaison de transmission (411) montée de manière rotative, d'un côté de celle-ci, sur l'unité de boîtier (100) et disposée, de l'autre côté de celle-ci, d'une manière telle qu'elle est mise en contact direct avec le corps d'entraînement de liaison de transmission (419).

11. Dispositif de marche de quai (10) selon la revendication 10, dans lequel la partie de support pliante intérieure de marche pliable (220) est agencée en nombre pluriel, et dans lequel la tringlerie à trous de transmission (430) comporte :
un corps de marche à trous de transmission (431) relié, à une extrémité de celui-ci, à la partie de support pliante intérieure de marche pliable (220) ;
un corps de tringlerie à trous de transmission (433) relié au corps de marche à trous de transmission (431) d'une manière relativement rotative ; et
un dispositif de blocage de tringlerie à trous de transmission (437) relié, d'un côté de celui-ci, au corps de tringlerie à trous de transmission (433) et disposé, de l'autre côté de celui-ci, sur la plaque de corps de liaison de transmission (411) de sorte qu'une rotation relative entre le corps de tringlerie à trous de transmission (433) et la plaque de corps de liaison de transmission (411) est permise sur une plage angulaire préréglée.

12. Dispositif de marche de quai (10) selon la revendication 1,
dans lequel l'unité d'entraînement (300) génère une force d'entraînement permettant le mouvement de la plaque de marche pliable (210) dans la direction d'entrée de véhicule du quai (P), et
dans lequel l'unité de transmission (400) transmet la force d'entraînement de l'unité d'entraînement (300) à l'unité de marche pliable (200) pour faire tourner la partie de support pliante de marche pliable d'une manière telle qu'au moins une partie de l'unité de transmission (400) déclenche le contact entre l'unité d'entraînement (300) et l'unité de marche pliable (200), et
dans lequel l'unité de transmission (400) comporte :
un corps de liaison de transmission (410) relié à une extrémité de l'unité d'entraînement (300) ; et
une tringlerie à trous de transmission (430) configurée pour être mise en contact direct avec le corps de liaison de transmission (410) d'une manière relative mobile sur une plage de confinement préréglée et reliée, à une extrémité de celle-ci, à la partie de support pliante intérieure de marche pliable (220).

13. Dispositif de marche de quai (10) selon la revendication 12, dans lequel le corps de liaison de transmission (410) comporte :
un corps d'entraînement de liaison de transmission (419) relié, à une extrémité de celui-ci, à l'unité d'entraînement (300) et configuré pour transmettre une force d'entraînement rectiligne par l'unité d'entraînement (300) sous la forme d'une force d'entraînement rectiligne et rotative ; et
une plaque de corps de liaison de transmission (411) montée de manière rotative, d'un côté de celle-ci, sur l'unité de boîtier (100) et disposée, de l'autre côté de celle-ci, d'une manière telle qu'elle est mise en contact direct avec le corps d'entraînement de liaison de transmission (419).

14. Dispositif de marche de quai (10) selon la revendication 13, dans lequel l'unité de transmission (400) comporte en outre une partie de crochet de blocage de transmission (420) configurée pour former un état de prise et de libération entre le corps d'entraînement de liaison de transmission (419) et la plaque de corps de liaison de transmission (411).
